(19) Europäisches Patentamt / European Patent Office / Office européen des brevets

(11) **EP 4 342 936 A1**

(12) **EUROPEAN PATENT APPLICATION**
published in accordance with Art. 153(4) EPC

(43) Date of publication:
**27.03.2024 Bulletin 2024/13**

(21) Application number: **22828342.0**

(22) Date of filing: **17.06.2022**

(51) International Patent Classification (IPC):
**C08J 9/228** (2006.01)

(52) Cooperative Patent Classification (CPC):
**C08J 9/228**

(86) International application number:
**PCT/JP2022/024273**

(87) International publication number:
**WO 2022/270425 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2021 JP 2021105921**

(71) Applicant: **JSP Corporation**
**Tokyo 100-0005 (JP)**

(72) Inventors:
• **SAKAMURA, Takumi**
**Kanuma-shi, Tochigi 322-0014 (JP)**
• **OHTA, Hajime**
**Kanuma-shi, Tochigi 322-0014 (JP)**

(74) Representative: **Kramer Barske Schmidtchen**
**Patentanwälte PartG mbB**
**European Patent Attorneys**
**Landsberger Strasse 300**
**80687 München (DE)**

(54) **POLYPROPYLENE RESIN FOAM PARTICLE MOLDED BODY AND METHOD FOR PRODUCING SAME**

(57)    A method for producing a molded article of expanded beads includes filling tubular polypropylene-based resin expanded beads (1) each having a through-hole in a mold, and supplying a heating medium to fusion-bond the expanded beads (1) to each other. The expanded beads (1) have a foamed layer constituted by polypropylene-based resin. A closed cell of the expanded beads (1) is 90% or more. An average hole diameter (d) of through-holes (11) of the expanded beads (1) is less than 1 mm. A ratio [d/D] of the average hole diameter (d) to an average outer diameter (D) of the expanded beads is 0.4 or less. An open cell content of the molded article of expanded beads is 2.5% or more and 12% or less.

FIG. 1

EP 4 342 936 A1

**Description**

TECHNICAL FIELD

The present disclosure relates to a molded article of polypropylene-based resin expanded beads in which tubular expanded beads each having a through-hole are fusion-bonded with one another, and a method for producing the same.

BACKGROUND ART

A molded article of polypropylene-based resin expanded beads is lightweight and excellent in cushioning property, rigidity and the like, and therefore is used for various applications. The molded article of polypropylene-based resin expanded beads is produced by, for example, an in-mold molding method in which polypropylene-based resin expanded beads are filled in a mold and heated with steam to secondarily expand the expanded beads, and at the same time, surfaces of the expanded beads are melted and fusion-bonded with one another to mold the expanded beads into a desired shape. Since the molded article of expanded beads immediately after molded tends to swell due to secondary expansion, in order to obtain a molded article of expanded beads having a desired shape, the molded article of expanded beads is cooled in a mold with water, air, or the like, and then demolded.

When the molded article of expanded beads after the in-mold molding is stored at normal temperature, steam that has flowed into cells of the molded article of expanded beads during in-mold molding is condensed in the cells, inside of the cells has a negative pressure, volume shrinkage occurs in the molded article of expanded beads, and the molded article may be greatly deformed. Therefore, after releasing the molded article of expanded beads from the mold, an aging step, is usually required, of allowing the molded article of expanded beads to stand for a predetermined period of time under a high-temperature atmosphere adjusted to a temperature of, for example, about 60°C to 80°C to recover the shape of the molded article of expanded beads.

In the in-mold molding of the polypropylene-based resin expanded beads, since the aging step requires capital investment as well as time and effort for the step, omitting the aging step leads to a significant improvement in productivity of the molded article of expanded beads. For example, Patent Literature 1 discloses a technique for fusing expanded beads including a foamed layer and a fusion-bondable layer while maintaining voids between the beads, and Patent Literature 1 describes that the aging step can be omitted. In addition, Patent Literature 2 discloses a technique of in-mold molding of expanded beads using polypropylene-based resin prepared to have a melting point, a melt flow index, a Z average molecular weight, and the like in specific ranges, and according to Patent Literature 2, aging time can be shortened.

PRIOR ART LITERATURE

PATENT LITERATURE

Patent Literature 1: JP-A-2003-39565
Patent Literature 2: JP-A-2000-129028

SUMMARY OF INVENTION

TECHNICAL PROBLEMS

However, in the technique described in Patent Literature 1, although the aging step can be omitted, since a large number of voids are formed between the expanded beads of the molded article, appearance of the molded article of expanded beads is significantly poor, and the rigidity is insufficient depending on applications. In the technique described in the technique of Patent Literature 2, although the aging step can be shortened, the aging step is still required, and in a case of omitting the aging step, the molded article of expanded beads is significantly shrunk and deformed, and it is difficult to obtain the molded article of expanded beads having a desired shape.

The present invention has been made in view of such a background, and an object of the present invention is to provide a method for producing a molded article of polypropylene-based resin expanded beads capable of obtaining the molded article of expanded beads having a desired shape as well as excellent appearance and rigidity even when the aging step is omitted.

MEANS FOR SOLVING PROBLEM

One aspect of the present invention is a method for producing a molded article of polypropylene-based resin expanded beads by filling tubular polypropylene-based resin expanded beads each having a through-hole in a mold and supplying a heating medium to fusion-bond the expanded beads to each other, wherein

the expanded beads have a foamed layer constituted by a polypropylene-based resin,
a closed cell content of the expanded beads is 90% or more,
an average hole diameter d of the through-holes of the expanded beads is less than 1 mm, and a ratio [d/D] of the average hole diameter d to an average outer diameter D of the expanded beads is 0.4 or less, and
an open cell content of the molded article of expanded beads is 2.5% or more and 12% or less.

Another aspect of the present invention is a molded article of polypropylene-based resin expanded beads, the molded article being formed by fusion-bonding tubular polypropylene-based resin expanded beads each having a through-hole with one another, wherein

a closed cell content of the molded article of expanded beads is 90% or more, and
an open cell content of the molded article of expanded beads is 2.5% or more and 12% or less.

EFFECTS OF INVENTION

According to the present invention, the molded article of polypropylene-based resin expanded beads having a desired shape and being excellent in appearance and rigidity can be obtained even when the aging step is omitted. Accordingly, according to the production method, production efficiency of the molded article of expanded beads excellent in appearance and rigidity can be significantly improved.

BRIEF DESCRIPTION OF DRAWINGS

FIG. 1 is a schematic view of an appearance of an expanded bead.
FIG. 2 is a schematic view of a cross-section of the expanded bead in a direction parallel to a penetration direction of a through-hole of the expanded bead constituted by a foamed layer.
FIG. 3 is a schematic view of a cross-section of the expanded bead in the direction parallel to the penetration direction of the through-hole of the expanded bead having a foamed layer and a fusion-bondable layer.
FIG. 4 is an explanatory diagram showing a method of calculating an area of a high-temperature peak.

MODE FOR CARRYING OUT INVENTION

In this description, "A to B" described as a numerical range means "A or more and B or less", and is used as including the values of A and B that are end points of the numerical range. In addition, in the case where a numerical value or a physical property value is expressed as a lower limit, it means that the numerical value or the physical property value is equal to or more than the numerical value or the physical property value, while in the case where a numerical value or a physical property value is expressed as an upper limit, it means that the numerical value or the physical property value is equal to or less than the numerical value or the physical property value. In addition, "% by weight" and "% by mass", and "parts by weight" and "parts by mass" are substantially synonymous, respectively. In addition, in the present description, the polypropylene-based resin expanded beads are appropriately referred to as "expanded beads", and the molded article of expanded beads is appropriately referred to as "molded article". Note that, the expanded beads having a foamed layer constituted by polypropylene-based resin are generally called polypropylene-based resin expanded beads.
The molded article of expanded beads is produced by performing a molding step in which a large number of expanded beads are filled in a mold, and the heating medium such as steam is supplied to fusion-bond the expanded beads to each other. In other words, the molded article can be obtained by the in-mold molding of the expanded beads.
The expanded beads each have a tubular shape with a through-hole, the average hole diameter d of the through-holes is less than 1 mm, and a ratio d/D of the average hole diameter d to an average outer diameter D of the expanded beads is 0.4 or less. The expanded beads have a foamed layer constituted by polypropylene-based resin, and have a closed cell rate of 90% or more. By in-mold molding of such expanded beads to produce a molded article having an open cell content of 2.5% or more and 12% or less, the molded article of expanded beads having a desired shape and being excellent in appearance and rigidity can be obtained even when the aging step is omitted. In a case where the aging step is omitted, for example, the shape of the molded article can be stabilized by leaving the molded article after demolding to stand for 12 hours or more in an environment of 23°C. However, it is also possible to carry out the aging step. Note that, in the production method described above, pre-pressurization in which internal pressure is applied in advance to the expanded beads before being filled in the mold may be performed, or the pre-pressurization may not be performed. It is possible to produce the molded article of expanded beads having a desired shape and being excellent in appearance and rigidity while omitting the aging step without performing the pre-pressurization.

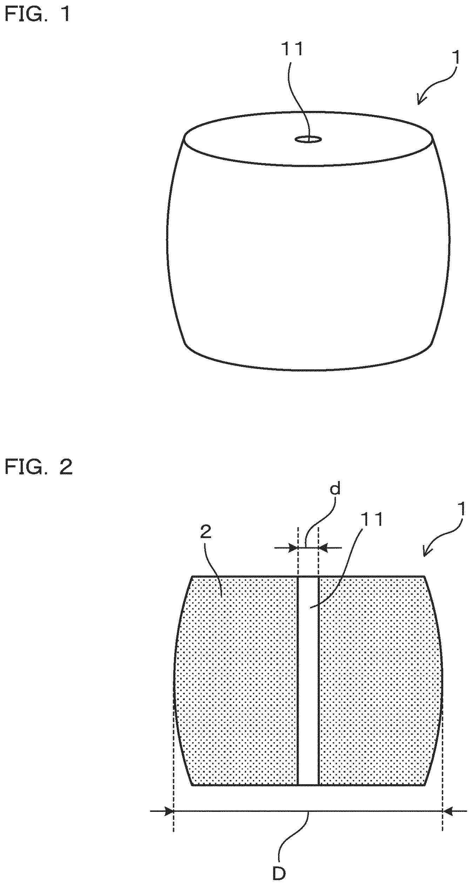

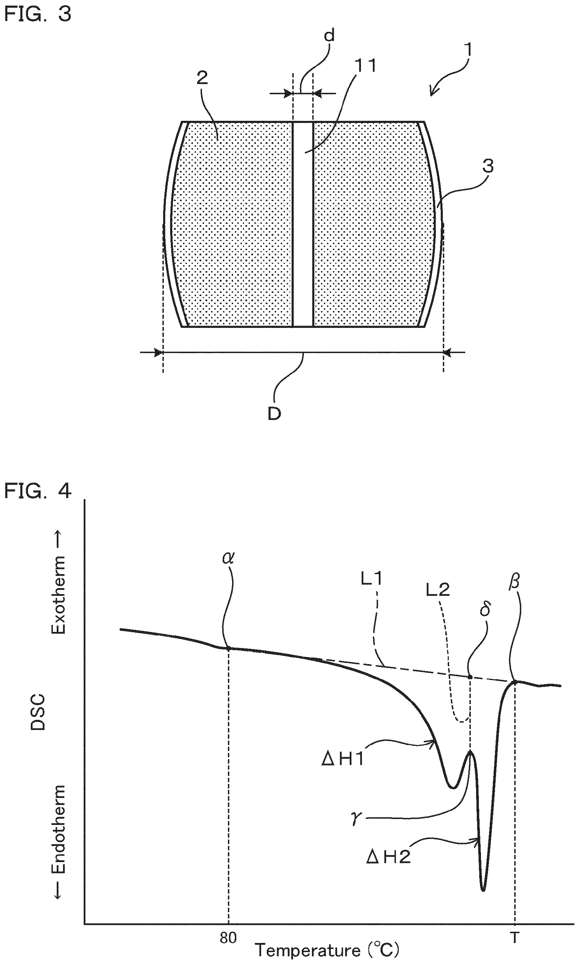

FIG. 1 to FIG. 3 show the expanded bead, but the present invention is not limited to these drawings. As shown in FIG. 1 and FIG. 2, an expanded bead 1 has a tubular shape and has a through-hole 11. The expanded bead 1 has a foamed layer 2 composed of polypropylene-based resin. Furthermore, as shown in FIG. 3, the expanded bead 1 preferably has a fusion-bondable layer 3 covering the foamed layer 2.

The foamed layer is constituted by polypropylene-based resin. In the present description, the polypropylene-based resin refers to a homopolymer of a propylene monomer and a propylene-based copolymer containing 50% by mass or more of a propylene-derived structural unit. The polypropylene-based resin is preferably a propylene-based copolymer obtained by copolymerizing propylene with another monomer. Preferable examples of the propylene-based copolymer include copolymers of propylene and an $\alpha$-olefin having 4 to 10 carbon atoms, such as an ethylene-propylene copolymer, a butene-propylene copolymer, a hexene-propylene copolymer, and an ethylene-propylene-butene copolymer. These copolymers are, for example, random copolymers, block copolymers, and the like, and are preferably random copolymers. In addition, the polypropylene-based resin may contain a plurality of kinds of polypropylene-based resins.

The polypropylene-based resin constituting the foamed layer may contain a polymer other than the polypropylene-based resin as long as the purpose and effect of the present disclosure are not impaired. Examples of the other polymer include elastomers or thermoplastic resin other than the polypropylene-based resin such as polyethylene-based resin and polystyrene-based resin. A content of the other polymer in the polypropylene-based resin constituting the foamed layer is preferably 20% by mass or less, more preferably 10% by mass or less, still more preferably 5% by mass or less, and 0, that is, it is particularly preferable that the foamed layer substantially contains only the polypropylene-based resin as the polymer.

The polypropylene-based resin constituting the foamed layer is preferably an ethylene-propylene random copolymer, and a content of an ethylene component in the copolymer is preferably 0.5% by mass or more and 10% by mass or less. Note that, a total of the ethylene component and a propylene component in the ethylene-propylene random copolymer is 100% by mass. In this case, it is possible to mold the molded article excellent in rigidity at a lower molding heating temperature (that is, with low molding pressure). From a viewpoint of further improving this effect, a content of the ethylene component in the copolymer is more preferably more than 2.0% by mass and 5.0% by mass or less, still more preferably 2.5% by mass or more and 4.0% by mass or less, and particularly preferably 2.8% by mass or more and 3.5% by mass or less. Note that, a content of a monomer component in the copolymer can be obtained by IR spectrum measurement. The ethylene component and the propylene component of the ethylene-propylene copolymer mean a structural unit derived from ethylene and a structural unit derived from propylene in the ethylene-propylene copolymer, respectively. In addition, the content of each monomer component in the copolymer means the content of a structural unit derived from each monomer in the copolymer.

A melting point Tmc of the polypropylene-based resin constituting the foamed layer is preferably 155°C or lower. In this case, the molded article excellent in appearance and rigidity can be molded at a lower molding temperature (that is, with molding pressure). From a viewpoint of improving this effect, the melting point Tmc of the polypropylene-based resin constituting the foamed layer is preferably 150°C or lower, and more preferably 145°C or lower. On the other hand, from a viewpoint of further improving heat resistance, mechanical strength, and the like of the molded article, the melting point Tmc of the polypropylene-based resin constituting the foamed layer is preferably 135°C or higher, more preferably 138°C or higher, and still more preferably 140°C or higher.

The melting point of the polypropylene-based resin is obtained based on JIS K7121:1987. Specifically, "(2) The case of measurement of melting temperature after a definite heat treatment" is adopted as a state adjustment, a DSC curve is obtained by raising temperature of a test piece subjected to the state adjustment from 30°C to 200°C at a heating rate of 10°C/min, and a vertex temperature of the melting peak is set as the melting point. Note that, when a plurality of melting peaks appears in the DSC curve, the vertex temperature of the melting peak having a largest area is taken as the melting point.

From a viewpoint of further enhancing expandability and moldability, a melt mass flow rate (that is, the MFR) of the polypropylene-based resin constituting the foamed layer is preferably 5 g/10 min or more, more preferably 6 g/10 min or more, and still more preferably 7 g/10 min or more. On the other hand, from a viewpoint of further enhancing the rigidity of the molded article, the MFR is preferably 12 g/10 min or less, and more preferably 10 g/10 min or less. Note that, the MFR of the polypropylene-based resin is a value measured under the conditions of a test temperature of 230°C and a load of 2.16 kg based on JIS K7210-1:2014.

The polypropylene-based resin constituting the foamed layer preferably has a flexural modulus of 800 MPa or more and 1600 MPa or less. From a viewpoint of enhancing the rigidity of the molded article and from a viewpoint of more reliably preventing a dimensional change in the case of omitting the aging step, the flexural modulus of the polypropylene-based resin constituting the foamed layer is preferably 800 MPa or more, more preferably 850 MPa or more, and still more preferably 900 MPa or more. On the other hand, from a viewpoint that a molded article excellent in appearance and rigidity can be molded at a lower molding temperature (that is, with low molding pressure) and from a viewpoint of obtaining a molded article of expanded beads excellent in energy absorbability, the flexural modulus of the polypropylene-based resin constituting the foamed layer is preferably less than 1200 MPa, more preferably 1100 MPa or less, and still more preferably 1000 MPa or less. Note that, the flexural modulus of the polypropylene-based resin can be obtained based on JIS K7171:2008.

In the past, particularly in a case where the expanded beads made of polypropylene-based resin having a flexural modulus of less than 1200 MPa are molded in a mold, the molded article tends to significantly shrink and deform probably because resistance against shrinkage and deformation after the demolding is small in the case of omitting the aging step. According to the method for producing a molded article, for example, even when expanded beads made of polypropylene-based resin having a flexural modulus of less than 1200 MPa are used, the aging step can be omitted.

The closed cell content of the expanded beads is 90% or more. From a viewpoint of ensuring good in-mold moldability of the expanded beads, and from a viewpoint of achieving good appearance and rigidity of the expanded beads, the closed cell content of the foamed layer is preferably 92% or more, and more preferably 95% or more.

The closed cell content of the expanded beads can be measured using an air-comparison pycnometer based on ASTM-D2856-70 Procedure C. Specifically, measurement is performed as follows. Using expanded beads having a bulk volume of about 20 cm$^3$ after the state adjustment as a measurement sample, an apparent volume Va was accurately measured by an ethanol immersion method as to be described below. After the measurement sample whose apparent volume Va has been measured is sufficiently dried, a true volume value Vx of the measurement sample measured by AccuPyc II 1340 manufactured by Shimadzu Corporation is measured in accordance with Procedure C described in ASTM-D2856-70. Then, based on these volume values Va and Vx, the closed cell content is calculated by the following formula (I), and an average value of five samples (N = 5) is taken as the closed cell content of the expanded beads.

$$\text{Closed cell content } (\%) = (Vx - W/\rho) \times 100/(Va - W/\rho) \dots (I)$$

Provided that

Vx: the true volume of the expanded beads measured by the above method, that is, a sum of the volume of the resin constituting the expanded beads and a total volume of the closed cell portion in the expanded beads (unit: cm$^3$), 
Va: the apparent volume (unit: cm$^3$) of expanded beads measured from an increase in water level when expanded beads are immersed in a measuring cylinder containing ethanol, 
W: weight of the measurement sample for expanded beads (unit: g), and 
$\rho$: density of resin constituting expanded beads (unit: g/cm$^3$).

The molded article has an open cell structure. The open cell structure is a minute space portion communicating with outside of the molded article. The open cell structure is formed by complicatedly connecting voids formed by allowing the through-holes of a plurality of expanded beads to communicate with each other, voids formed by allowing the through-holes of the expanded beads to communicate with voids formed between the expanded beads, voids formed by allowing the voids between the expanded beads to communicate with each other, open cell portions of the expanded beads constituting the molded article, and the like.

In the above production method, a molded article having an open cell content of 2.5% or more and 12% or less is produced. Based on this, even when the aging step is omitted, significant shrinkage, deformation, and the like are prevented, and a molded article having a desired shape and being excellent in appearance and rigidity can be produced. This is considered to be because when the molded article has the open cell structure at a predetermined ratio, air quickly flows into the cells in the molded article after the demolding, and the internal pressure of the entire molded article increases, so that dimensions of the molded article easily stabilize at an early stage. In a case where the open cell content of the molded article is less than 2.5%, when the aging step is omitted, the molded article may be significantly shrunk and deformed, and a molded article having a desired shape may not be obtained. From a viewpoint that the significant shrinkage, deformation and the like of the molded article can be further prevented even when the aging step is omitted, the open cell content of the molded article is preferably 3% or more, more preferably 4% or more, and still more preferably 4.5% or more. On the other hand, in a case where the open cell content of the molded article exceeds 12%, the appearance of the molded article may be deteriorated and the rigidity may be deteriorated. From a viewpoint that the appearance and rigidity of the molded article can be further improved, the open cell content of the molded article is preferably 10% or less, more preferably 8% or less, still more preferably 7.5% or less, and particularly preferably 6% or less.

The open cell content of the molded article is measured in accordance with ASTM 2856-70 Procedure B. In other words, the open cell content is a corrected open cell content measured by a method of correcting closed cells broken during cutting out the measurement sample in consideration. As a measuring device, a dry automatic densitometer (specifically, AccuPyc II 1340 manufactured by Shimadzu Corporation) is used. Specifically, the open cell content is measured as follows. To start with, a state of the molded article is adjusted by allowing the molded article to stand at 23°C for 12 hours. Next, a first test piece having a cubic shape of 2.5 cm in length $\times$ 2.5 cm in width $\times$ 2.5 cm in height is cut out from a central portion of the molded article, and its geometric volume Va [unit: $cm^3$] is measured. Specifically, Va is a value obtained by vertical dimension [cm] $\times$ horizontal dimension [cm] $\times$ height dimension [cm]. A true volume V1 [unit: $cm^3$] of the first test piece is measured with the dry automatic densitometer. Next, the first test piece is divided into 8 equal parts to obtain a cubic second test piece of 1.25 cm in length $\times$ 1.25 cm in width $\times$ 1.25 cm in height. Next, a true volume V2 [unit: $cm^3$] of the second test piece is measured with the dry automatic densitometer. Note that, the true volume V2 of the second test piece is a total value of the true volumes of the eight pieces cut out from the first test piece. An open cell content Co [unit:%] is calculated by the following formula (II).

Note that, as the open cell content of the molded article, five first test pieces are cut out from the molded article, the open cell content is calculated by the above method, and an arithmetic average value thereof is used as a result. The open cell content Co measured in this manner is also referred to as a corrected continuous cell content.

$$Co = (Va - 2V1 + V2) \times 100/Va \text{ ... (II)}$$

Note that, the open cell content Co in the present description is a physical property value measured in accordance with ASTM 2856-70 Procedure B as described above, and is a physical property value that cannot be calculated based on the closed cell content of the molded article measured in accordance with ASTM 2856-70 Procedure C to be described later. Specifically, the relationship between the open cell content Co of the molded article measured in accordance with ASTM 2856-70 Procedure B and the closed cell content Bp of the molded article measured in accordance with ASTM 2856-70 Procedure is represented by the following formula (III). The open cell content Co measured in accordance with ASTM 2856-70 Procedure B is corrected in consideration of the closed cells broken when the test piece is cut out, while in the method described in ASTM 2856-70 Procedure C, the closed cells broken when the test piece is cut out are not considered, and thus, both are conceptually different. In addition, a ratio of closed cells broken when the test piece is cut out is greatly affected by a shape (that is, presence or absence of the through-holes, the hole diameter of the through-holes, and the like) of the expanded beads constituting the molded article of expanded beads and the closed cell content of the expanded beads. Furthermore, it is also affected by molding conditions (that is, the molding pressure, the internal pressure of the expanded beads, a filling method, and the like) of the molded article of expanded beads. Accordingly, it is also difficult to estimate a value of the open cell content Co based on a value of the closed cell content of the molded article measured in accordance with ASTM 2856-70 Procedure C.

In addition, the open cell content Co in the present description is conceptually different from voidage of the molded article. The voidage of the molded article is measured and calculated, for example, as follows. Specifically, to start with, a test piece having a rectangular parallelepiped shape (20 mm in length $\times$ 100 mm in width $\times$ 20 mm in height) is cut out from the central portion of the molded article. Next, the test piece is immersed in the measuring cylinder containing ethanol, and a true volume Vc [L] of the test piece is obtained from an increase in a liquid level of ethanol. In addition, an apparent volume Vd [L] is obtained from an outer dimension of the test piece. The voidage of the molded article can be obtained from the obtained true volume Vc and the apparent volume Vd by the following formula (IV). Accordingly, also in the measurement of the voidage of the molded article, the closed cells broken when the test piece is cut out are not considered. In addition, the method is different from a measurement method for the open cell content Co in that a liquid such as ethanol is used as a medium for measurement. The voidage of the molded article is always larger than the open cell content Co of the molded article.

$$Co \neq 100\text{-}Bp \text{ ... (III)}$$

$$\text{Voidage (\%)} = [(Vd - Vc)/Vd] \times 100 \text{ ... (IV)}$$

A molded article having an open cell content of 2.5% or more and 12% or less is produced by in-mold molding of expanded beads satisfying the following (1) to (3).

(1) The expanded beads each have through-hole. In a case where the expanded beads have no through-holes, it is difficult to set the value of the open cell content of the molded article to 2.5% or more.

(2) The average hole diameter d of the through-holes of the expanded beads is set to less than 1 mm. By decreasing the average hole diameter, the open cell content tends to decrease, and by increasing the average hole diameter, the open cell content tends to increase. In a case where the average hole diameter of the through-holes is 1 mm or more, it tends to be difficult to set the value of the open cell content of the molded article to 12% or less.

(3) The ratio [d/D] of the average hole diameter d of the through-holes to the average outer diameter D of the expanded beads is set to 0.4 or less. By decreasing the ratio [d/D], the open cell content tends to decrease, and by increasing the ratio [d/D], the open cell content tends to increase. In a case where the ratio [d/D] exceeds 0.4, it tends to be difficult to set the value of the open cell content of the molded article to 12% or less.

In addition to the in-mold molding using the expanded beads satisfying the above (1) to (3), for example, by controlling the following conditions (4) to (6) in the in-mold molding, the open cell content of the molded article can be easily adjusted to a range of 2.5% or more and 12% or less.

(4) When the internal pressure is applied to the expanded beads before filling into the mold, the secondary expansion easily occurs during molding, so that the open cell content tends to decrease. In addition, when the internal pressure of the expanded beads increases, the expanded beads are more likely to swell during the molding, and thus the open cell content tends to decrease. From a viewpoint of preventing the open cell content from becoming too small and more stably producing a molded article having an open cell content of 2.5% or more, and from a viewpoint of production efficiency of the molded article, the internal pressure of the expanded beads filled in the mold is preferably 0.05 MPa (G) (G: gauge pressure) or less, more preferably 0.03 MPa (G) or less, still more preferably 0.01 MPa (G) or less, and 0 MPa (G), that is, it is particularly preferable to mold the expanded beads without applying the internal pressure to the expanded beads. Note that, from a viewpoint of molding a good molded article of expanded beads, the lower limit of the internal pressure is 0 MPa (G).

(5) In a case of filling the expanded beads in the mold by a cracking filling method, when a cracking width (%) increases, since gaps between the expanded beads are easily filled, the open cell content tends to decrease, and when the cracking width (%) decreases, since the gaps between the expanded beads are easily formed, the open cell content tends to increase. The cracking width is usually preferably in a range of 5% to 35%, more preferably in a range of 10% to 30%, and still more preferably in a range of 15% to 25%. Note that, incidentally, the cracking filling method is a method of providing an open portion of the mold that does not completely close the mold in order to efficiently fill the expanded beads in an amount exceeding the volume in the mold when filling the expanded beads into the mold. This open portion is called cracking, and a ratio (%) of the volume of the open portion to the volume in the mold is expressed as the cracking width (%). Note that, incidentally, the cracking is finally closed at the time of introducing steam after the expanded beads are filled in the mold, and as a result, the filled expanded beads are mechanically compressed.

(6) When the molding temperature (specifically, the molding pressure) increases, the open cell content tends to decrease, and when the molding temperature (specifically, the molding pressure) decreases, the open cell content tends to increase. However, from the viewpoint of the production efficiency of the molded article, it is preferable to perform molding at low molding pressure. From such a viewpoint, the molding pressure is, for example, preferably in a range of 0.20 MPa (G) (G: gauge pressure) to 0.30 MPa (G), more preferably in a range of 0.20 MPa (G) to 0.26 MPa (G), and still more preferably in a range of 0.22 MPa (G) to 0.24 MPa (G).

As described above, by controlling the molding conditions of the expanded beads as in (4) to (6), the open cell content of the molded article can be easily adjusted to a range of 2.5% or more and 12% or less. The conditions for adjusting the open cell content of the molded article are not necessarily limited to (4) to (6). In other words, by molding the expanded beads so that the open cell content of the molded article is 2.5% or more and 12% or less, a molded article having a desired shape and being excellent in appearance and rigidity can be produced while being formed without aging.

The expanded beads are preferably expanded beads having a multilayer structure with the foamed layer and the fusion-bondable layer covering the foamed layer. In a case where the expanded beads have the fusion-bondable layer, the fusion-bondable layer is made of, for example, a polyolefin-based resin. Examples of the polyolefin-based resin include the polyethylene-based resin, the polypropylene-based resin, and the polybutenebased resin. From a viewpoint of adhesiveness to the foamed layer, the polyolefin-based resin is preferably the polyethylene-based resin or the polypropylene-based resin, and more preferably the polypropylene-based resin. Examples of the polypropylene-based resin include an ethylene-propylene copolymer, an ethylene-butene copolymer, an ethylene-propylene-butene copolymer, a propylene homopolymer, and the like, and among them, the ethylene-propylene copolymer or the ethylene-propylene-butene copolymer is preferable.

A melting point Tms of the polyolefin-based resin constituting the fusion-bondable layer is preferably lower than the melting point Tmc of the polypropylene-based resin constituting the foamed layer. In other words, Tms < Tmc is preferable. In this case, fusion bondability of the expanded beads is improved, and molding at a lower temperature becomes possible. Furthermore, in this case, the significant shrinkage and deformation to be caused in the case of omitting the aging step can be more easily prevented. The reason for this is not clear, but it is considered that molding at a low molding heating temperature makes it possible to reduce the heat the expanded beads receive via the heating medium such as steam in the in-mold molding, and the dimensional change due to thermal shrinkage of the molded article is more easily prevented. From the above viewpoint, Tmc - Tms ≥ 5 is preferable, Tmc - Tms ≥ 6 is more preferable, and Tmc - Tms ≥ 8 is still more preferable. From a viewpoint of further preventing peeling between the foamed layer and the fusion-bondable layer, adhesion between the expanded beads, and the like, Tmc - Tms ≤ 35 is preferable, Tmc - Tms ≤ 20 is more preferable, and Tmc - Tms ≤ 15 is still more preferable.

From a viewpoint of further enhancing the fusion bondability of the expanded beads during the molding, the melting point Tms of the polyolefin-based resin constituting the fusion-bondable layer is preferably 120°C or more and 145°C or less, and more preferably 125°C or more and 140°C or less. The melting point of the polyolefin-based resin constituting the fusion-bondable layer is obtained based on JIS K7121:1987. Specifically, it is obtained by the same conditions and methods as those for the polypropylene-based resin constituting the foamed layer described above.

From a viewpoint of reliably preventing the peeling between the foamed layer and the fusion-bondable layer, the MFR of the polyolefin-based resin constituting the fusion-bondable layer is preferably at the same level as the MFR of the polypropylene-based resin constituting the foamed layer, and specifically, is preferably 2 to 15 g/10 min, more preferably 3 to 12 g/10 min, and still more preferably 4 to 10 g/10 min. Note that, in a case where the polyolefin-based resin is polypropylene-based resin, the MFR is a value measured under conditions of the test temperature of 230°C and the load of 2.16 kg in accordance with JIS K7210-1:2014, and in a case where the polyolefin-based resin is the polyethylene-based resin, the MFR is a value measured under conditions of a test temperature of 190°C and the load of 2.16 kg in accordance with JIS K7210-1:2014.

In a case where the expanded beads are beads having a multilayer structure including the foamed layer and the fusion-bondable layer covering the foamed layer, the foamed layer is composed of the polypropylene-based resin in an foamed state, and the fusion-bondable layer is composed of the polyolefin-based resin in the foamed state or a non- foamed state. The fusion-bondable layer is preferably in substantially the non-foamed state. The term "substantially the non- foamed state" includes a state in which the fusion-bondable layer is not expanded and the cells are not contained and a state in which the cells disappear after expanding, and means that there is almost no cell structure. A thickness of the fusion-bondable layer is, for example, 0.5 to 100 μm. In addition, an intermediate layer may be further provided between the foamed layer and the fusion-bondable layer.

A mass ratio (a ratio of % by mass) of the resin constituting the foamed layer and the resin constituting the fusion-bondable layer is preferably 99.5 : 0.5 to 80 : 20, more preferably 99 : 1 to 85 : 15, and still more preferably 97 : 3 to 90 : 10 from a viewpoint of improving the moldability while maintaining the rigidity of the molded article. The mass ratio is represented by the resin constituting the foamed layer : the resin constituting the fusion-bondable layer.

The expanded beads preferably have a crystal structure in which an endothermic peak (that is, a resin-intrinsic peak) due to melting inherent to the polypropylene-based resin and one or more melting peaks (that is, the high-temperature peak) appear on a high temperature side thereof in a DSC curve obtained when heated from 23°C to 200°C at a heating rate of 10°C/min. The DSC curve is obtained by differential scanning calorimetry (DSC) in accordance with JIS K7121:1987, using 1 to 3 mg of expanded beads as a test sample.

The resin-intrinsic peak is the endothermic peak due to melting intrinsic to the polypropylene-based resin constituting the expanded beads, and is considered to be due to endotherm during melting of crystals inherent in the polypropylene-based resin. On the other hand, the endothermic peak on the high temperature side of the resin-intrinsic peak (that is, the high-temperature peak) is an endothermic peak appearing on a higher-temperature side than the resin-intrinsic peak in the DSC curve. When this high-temperature peak appears, it is presumed that secondary crystals are present in the resin. Note that, as described above, in the DSC curve obtained when heating from 23°C to 200°C (that is, a first heating) is performed at the heating rate of 10°C/min, then cooling from 200°C to 23°C is performed at a cooling rate of 10°C/min, and heating from 23°C to 200°C (that is, a second heating) is performed again at the heating rate of 10°C/min, since only the endothermic peak due to the melting inherent in the polypropylene-based resin constituting the expanded beads is observed, the resin-intrinsic peak and the high-temperature peak can be distinguished. The vertex temperature of the resin-intrinsic peak may be slightly different between the first heating and the second heating, but a difference is usually within 5°C.

Heat of fusion of the high-temperature peak of the expanded beads is preferably 5 to 40 J/g, more preferably 7 to 30 J/g, and still more preferably 10 to 20 J/g from a viewpoint of further improving the moldability of the expanded beads and from a viewpoint of obtaining a molded article having better rigidity.

In addition, the ratio of the heat of fusion of the high-temperature peak to the heat of fusion of all melting peaks of the DSC curve (the heat of fusion of the high-temperature peak/the heat of fusion of all melting peaks) is preferably 0.05 to 0.3, more preferably 0.1 to 0.25, and still more preferably 0.15 to 0.2.

By setting the ratio between the heat of fusion of the high-temperature peak and the heat of fusion of all melting peaks within such a range, it is considered that the expanded beads have particularly excellent mechanical strength and excellent in-mold moldability due to the presence of secondary crystals represented as the high-temperature peak.

Here, the heat of fusion of all melting peaks refers to the sum of the heat of fusion obtained from the areas of all the melting peaks in the DSC curve.

The heat of fusion at each peak of the DSC curve of the expanded beads is a value obtained as follows. To start with, one expanded bead is collected from an expanded bead group after the state adjustment. Using the expanded beads as a test piece, a DSC curve is obtained when the test piece is heated from 23°C to 200°C at the heating rate of 10°C/min by a differential scanning calorimeter. FIG. 4 shows the example of the DSC curve. As exemplified in FIG. 4, the DSC curve has a resin-intrinsic peak $\Delta$H1 and a high-temperature peak $\Delta$H2 having a vertex on the higher-temperature side than the vertex of the resin-intrinsic peak $\Delta$H1.

Next, a point $\alpha$ at a temperature of 80°C on the DSC curve and a point $\beta$ at a melting end temperature T of the expanded beads are connected to obtain a straight line L1. Next, a straight line L2 parallel to a vertical axis of the graph is drawn from a point $\gamma$ on the DSC curve corresponding to a valley portion between the resin-intrinsic peak $\Delta$H1 and the high-temperature peak $\Delta$H2, and a point at which the straight line L1 and the straight line L2 intersect is defined as $\delta$. Note that, the point $\gamma$ can also be referred to as a maximum point existing between the resin-intrinsic peak $\Delta$H1 and the high-temperature peak $\Delta$H2.

An area of the resin-intrinsic peak $\Delta$H1 is an area of a portion surrounded by the curve of the resin-intrinsic peak $\Delta$H1 portion of the DSC curve, a line segment $\alpha$-$\delta$, and a line segment $\gamma$-$\delta$, and this is taken as the heat of fusion of the resin-intrinsic peak.

The area of the high-temperature peak $\Delta$H2 is the area of a portion surrounded by the curve of a high-temperature peak $\Delta$H2 portion of the DSC curve, a line segment $\delta$-$\beta$, and the line segment $\gamma$-$\delta$, and this is taken as the heat of fusion of the high-temperature peak(that is, heat of high-temperature peak).

The area of all melting peaks is the area of a portion surrounded by the curve of the resin-intrinsic peak $\Delta$H1 portion of the DSC curve, the curve of the high-temperature peak $\Delta$H2 portion, and the line segment $\alpha$-$\beta$ (that is, the straight line L1), and this is taken as the heat of fusion of all melting peaks.

The expanded beads have the through-holes as described above. The tubular expanded beads having the through-holes preferably have at least one tubular hole penetrating in an axial direction of the columnar expanded beads such as a cylinder and a prism. It is more preferable that the expanded beads have the cylindrical shape and have the tubular hole penetrating in the axial direction thereof.

In a case where the expanded beads have no through-holes, the open cell content of the molded article tends decrease to, for example, less than 2.5%. As a result, in the case of omitting the aging step, the significant shrinkage and deformation of the molded article may not be prevented. In a case where it is desired to increase the open cell content of the molded article using expanded beads having no through-holes, for example, the molding pressure is lowered to actively form inter-bead voids, but the appearance and rigidity of the molded article may be significantly deteriorated. On the other hand, even in a case where the expanded beads have the through-holes, when the average hole diameter d is too large, the open cell content of the molded article tends to increase to, for example, more than 12%. As a result, the appearance and rigidity of the molded article may be deteriorated. In a case where it is desired to reduce the open cell content of the molded article using expanded beads having an excessively large average hole diameter d, for example, it is considered to sufficiently increase the molding pressure, but the molded article may be thermally shrunk to impair dimensional stability. From this viewpoint, the average hole diameter d of the expanded beads is less than 1 mm as described above. The average hole diameter d of the expanded beads is preferably 0.95 mm or less, more preferably 0.92 mm or less, and still more preferably 0.90 mm or less from a viewpoint of obtaining the molded article having a desired shape and obtaining a molded article having better appearance and rigidity even when the aging step is omitted. Note that, from a viewpoint that the value of the open cell content of the molded article can be more easily adjusted, the lower limit of the average hole diameter d of the expanded beads is preferably 0.2 mm or more, and more preferably 0.4 mm or more.

The average hole diameter d of the expanded beads can be adjusted not only by adjusting a hole diameter dr of the through-holes in the resin particles to be described later but also by adjusting the apparent density and the heat of high-temperature peak of the expanded beads. In addition, the average hole diameter d can be more easily adjusted to a small value by forming the expanded beads into second-step expanded beads produced by two-step expansion method.

The average hole diameter d of the through-holes of the expanded beads is obtained as follows. 50 or more expanded beads randomly selected from the expanded bead group are cut perpendicularly to the penetration direction of the through-holes at a position where the area of a cut surface is maximized. The cut surface of each expanded bead is photographed, a cross-sectional area (specifically, an opening area) of the through-hole portions is obtained, the diameter of a virtual perfect circle having the same area as the area of the cross-sectional area of the through-hole portions is calculated, and the arithmetic average value thereof is taken as the average hole diameter d of the through-holes of the expanded beads. Note that, even when the size of the through-holes of each expanded bead is not uniform in a through-hole diameter in the penetration direction, the through-hole diameter of each expanded bead is determined by the hole diameter at a position where the area of the cut surface of the expanded bead is maximized as described above.

The average outer diameter D of the expanded beads is preferably 2 mm or more, more preferably 2.5 mm or more, and still more preferably 3 mm or more from a viewpoint that a wall thickness of the tubular expanded beads increases and secondary expandability of the expanded beads and the rigidity of the molded article are improved. On the other hand, the thickness is preferably 5 mm or less, more preferably 4.5 mm or less, and still more preferably 4.3 mm or less from a viewpoint of improving filling property into the mold during the molding.

The ratio d/D of the average hole diameter d to the average outer diameter D of the expanded beads is 0.4 or less. In a case where the ratio d/D is too large, the open cell content of the molded article tends to increase to, for example, more than 12%. As a result, the appearance and rigidity of the molded article may be deteriorated. From a viewpoint of improving the appearance of the molded article, from a viewpoint of further improving the rigidity, and from a viewpoint of further improving the secondary expandability, the d/D is preferably 0.35 or less, more preferably 0.3 or less, and still more preferably 0.25 or less. Note that, the ratio d/D is preferably 0.1 or more from a viewpoint that the value of the open cell content of the molded article can be more easily adjusted.

The average outer diameter D of the expanded beads is obtained as follows. 50 or more expanded beads randomly selected from the expanded bead group are cut perpendicularly to the penetration direction of the through-holes at a position where the area of a cut surface is maximized. The cut surface of each expanded bead is photographed, the cross-sectional area (specifically, the cross-sectional area also including an opening portion of the through-holes) of the expanded bead is obtained, the diameter of the virtual perfect circle having the same area as the area of the cross-sectional area of the expanded bead is calculated, and the arithmetic average value thereof is taken as the average outer diameter D of the expanded bead. Note that, even when the outer diameter of each expanded bead is not uniform in the penetration direction, the outer diameter of each expanded bead is determined by the outer diameter at the position where the area of the cut surface of the expanded bead in the direction perpendicular to the penetration direction is maximized as described above.

The average value of the wall thickness t of the tubular expanded beads is preferably 1.2 mm or more and 2 mm or less. When the average value of the wall thickness t is within this range, the wall thickness of the expanded beads is sufficiently thick, so that the secondary expandability during the in-mold molding is further improved. In addition, the expanded beads are more difficultly crushed against an external force, and the rigidity of the molded article is further improved. From such a viewpoint, an average wall thickness t of the expanded beads is more preferably 1.3 mm or more, and still more preferably 1.5 mm or more.

The average wall thickness t of the expanded beads is a distance from a surface (that is, an outer surface) of the expanded beads to an outer peripheries (that is, inner surfaces of the expanded beads) of the through-hole, and is a value obtained by the following formula (A).

$$t = (D-d)/2 \ ... \ (A)$$

d: average hole diameter (mm) of through-holes
D: average outer diameter (mm) of expanded beads

In addition, the ratio t/D of the average wall thickness t to the average outer diameter D of the expanded beads is preferably 0.35 or more and 0.5 or less. When t/D is within the above range, the filling property of the expanded beads is good and the secondary expandability is further improved in the in-mold molding of the expanded beads. Accordingly, the molded article excellent in appearance and rigidity can be produced at the lower molding heating temperature.

From a viewpoint of a balance between light-weight property and rigidity of the molded article, the apparent density of the expanded beads is preferably 10 kg/m$^3$ or more and 150 kg/m$^3$ or less, more preferably 15 kg/m$^3$ or more and 100 kg/m$^3$ or less, still more preferably 20 kg/m$^3$ or more and 80 kg/m$^3$ or less, and particularly preferably 25 kg/m$^3$ or more and 45 kg/m$^3$ or less. In the past, particularly in a case of producing a molded article having a low apparent density, the molded article is likely to be significantly deformed after the demolding, and it is difficult to omit the aging step. On the other hand, in the production method of the present disclosure, even when the apparent density is small, the aging step can be omitted, and the molded article having a good appearance can be produced even without aging.

The apparent density of the expanded beads can be obtained by immersing the expanded bead group (weight W (g) of the expanded bead group) left for 1 day under conditions of a relative humidity of 50%, 23°C, and 1 atm in the measuring cylinder containing alcohol (for example, ethanol) at 23°C using a wire mesh or the like, obtaining a volume V (L) of the expanded bead group from an increase in the water level, dividing the weight of the expanded bead group by a volume of the expanded bead group (W/V), and converting the unit into [kg/m$^3$].

From a viewpoint of further preventing the significant shrinkage and deformation of the molded article in the case of omitting the aging step, the ratio of the apparent density of the expanded beads to a bulk density of the expanded beads (that is, apparent density/bulk density) is preferably 1.7 or more, and more preferably 1.75 or more. On the other hand, the apparent density/bulk density is preferably 2.3 or less, more preferably 2.1 or less, and still more preferably 1.9 or less from a viewpoint of further enhancing the rigidity of the molded article and from a viewpoint of further improving the appearance.

The bulk density of the expanded beads is obtained as follows. The expanded beads are randomly taken out from the expanded bead group and placed in the measuring cylinder with a volume of 1 L, a large number of the expanded beads are accommodated up to a scale of 1 L so as to be in a natural deposition state, a mass W2 [g] of the accommodated expanded beads is divided by an accommodation volume V2 (1 L) (W2/V2), and the unit is converted to [kg/m$^3$], whereby the bulk density of the expanded beads is obtained.

The expanded beads can be produced, for example, by a method in which polypropylene-based resin particles containing polypropylene-based resin as a base material resin are dispersed in a dispersion medium (for example, a liquid), the resin particles are impregnated with a blowing agent, and the resin particles containing the blowing agent are released together with the dispersion medium under a low pressure (that is, a dispersing medium release foaming method). Specifically, it is preferable that the resin particles are dispersed in the dispersion medium in a sealed container, and after heating, a blowing agent is injected to impregnate the resin particles with the blowing agent. Thereafter, after a holding step of growing the secondary crystals at a constant temperature, it is preferable to obtain expanded beads by releasing content in the sealed container to a low pressure to expand the resin particles containing the blowing agent. Note that, in the case of forming the fusion-bondable layer, resin particles having a multilayer structure including the core layer and the fusion-bondable layer covering the core layer are expanded, whereby the expanded beads having a multilayer structure including the foamed layer and the fusion-bondable layer covering the foamed layer can be obtained.

The resin particles are produced, for example, as follows. To start with, the polypropylene-based resin to be the base material resin and an additive such as a cell nucleating agent supplied as necessary are supplied into an extruder, and heated and kneaded to obtain a resin melt-kneaded product. Thereafter, the resin melt-kneaded product is extruded into a tubular strand having through-holes from a small hole of the die attached to a tip of the extruder, cooled, and cut to obtain resin particles. An extrudate is cut, for example, with a pelletizer. A cutting method can be selected from a strand cutting method, a hot cutting method, an underwater cutting method, and the like. In this manner, tubular resin particles having the through-holes can be obtained. Note that, in the case of forming a fusion-bondable layer, the resin melt-kneaded product of each raw material is obtained using an extruder for forming the core layer and an extruder for forming the fusion-bondable layer, each melt-kneaded product is extruded and joined in a die to form a sheath-core composite including a tubular core layer in the non- foamed state and a fusion-bondable layer in the non-foamed state covering an outer surface of the tubular core layer, and the composite is cooled and cut while being extruded in a strand shape from pores of a spinneret attached to a tip of the extruder, whereby multilayer resin particles can be obtained.

A particle diameter of the resin particles is preferably 0. 1 to 3.0 mm, and more preferably 0.3 to 1.5 mm. In addition, a length/outer diameter ratio of the resin particles is preferably 0.5 to 5.0, and more preferably 1.0 to 3.0. In addition, an average mass per one particle (obtained from the mass of 200 randomly selected particles) is preferably 0.1 to 20 mg, more preferably 0.2 to 10 mg, still more preferably 0.3 to 5 mg, and particularly preferably 0.4 to 2 mg. The mass ratio of the core layer and the fusion-bondable layer in the case of the multilayer resin particles is preferably 99.5 : 0.5 to 80 : 20, more preferably 99 : 1 to 85 : 15, and still more preferably 97 : 3 to 90 : 10. The mass ratio is represented by core layer : fusion-bondable layer.

By adjusting the hole diameter dr of the through-holes in the resin particles, the average hole diameter d of the through-holes in the expanded beads can be adjusted to the above desired range. The hole diameter dr of the through-holes of the core layer of the resin particles can be adjusted by, for example, the hole diameter (that is, the inner diameter of the die) of a small hole of the die for forming the through-holes. In addition, by adjusting the particle diameter and average mass of the resin particles, the average outer diameter and the average wall thickness of the expanded beads can be adjusted to the above desired range.

From a viewpoint of more reliably producing expanded beads in which the average hole diameter d of the through-holes is less than 1 mm and the ratio d/D of the average hole diameter d to the average outer diameter D is 0.4 or less, an average hole diameter dr of the through-holes of the resin particles is preferably less than 0.25 mm, more preferably less than 0.24 mm, and still more preferably 0.22 mm or less. From a viewpoint of production stability of resin particles having through-holes, the average hole diameter dr of the through-holes of the resin particles is preferably 0.1 mm or more.

In addition, from the same viewpoint, the ratio dr/Dr of the average hole diameter dr to the average outer diameter Dr of the resin particles is preferably 0.4 or less, more preferably 0.3 or less, still more preferably 0.25 or less, and particularly preferably 0.2 or less. From the viewpoint of the production stability of the resin particles having through-holes, the ratio dr/Dr of the average hole diameter dr to the average outer diameter Dr of the resin particles is preferably 0.1 or more.

The average hole diameter dr of the through-holes of the resin particles is obtained as follows. 50 or more resin particles randomly selected from the resin particle group are cut perpendicularly to the penetration direction of the through-holes at the position where the area of the cut surface is maximized. The cut surface of each resin particle is photographed, the cross-sectional area (specifically, the opening area) of the through-hole portions is obtained, the diameter of the virtual perfect circle having the same area as the area of the cross-sectional area of the through-hole portions is calculated, and the arithmetic average thereof is taken as the average hole diameter dr of the through-holes of the resin particles. Note that, even in a case where the size of the through-holes of each resin particle is not uniform in the through-hole diameter in the penetration direction, the through-hole diameter of each resin particle is determined by the hole diameter at the position where the area of the cut surface of the resin particle is maximized as described above.

The average outer diameter Dr of the resin particles is obtained as follows. 50 or more resin particles randomly selected from the resin particle group are cut perpendicularly to the penetration direction of the through-holes at the position where the area of the cut surface is maximized. The cut surface of each resin particle is photographed, the cross-sectional area (specifically, the cross-sectional area also including the opening portion of the through-holes) of the resin particle is obtained, the diameter of the virtual perfect circle having the same area as the area of the cross-sectional area of the resin particle is calculated, and the arithmetic average value thereof is taken as the average outer diameter Dr of the resin particle. Note that, even when the outer diameter of each resin particle is not uniform in the penetration direction, the outer diameter of each resin particle is determined by the outer diameter at the position where the area of the cut surface of the resin particle in the direction perpendicular to the penetration direction is maximized as described above.

Note that, the particle diameter, the length/outer diameter ratio, and the average mass of the resin particles in a strand cutting method can be prepared by appropriately changing an extrusion speed, a take-up speed, a cutter speed, and the like when the resin melt-kneaded product is extruded.

As the dispersion medium (specifically, the liquid) for dispersing the resin particles obtained as described above in the sealed container, an aqueous dispersion medium is used. The aqueous dispersion medium is a dispersion medium (specifically, a liquid) containing water as a main component. A proportion of water in the aqueous dispersion medium is preferably 60% by mass or more, more preferably 70% by mass or more, and still more preferably 80% by mass or more. Examples of the dispersion medium other than water in the aqueous dispersion medium include ethylene glycol, glycerin, methanol, and ethanol.

Additives such as a cell nucleating agent, a crystal nucleating agent, a colorant, a flame retardant, a flame retardant aid, a plasticizer, an antistatic agent, an antioxidant, an ultraviolet inhibitor, a light stabilizer, a conductive filler, and an antibacterial agent can be added to the core layer of the resin particles as necessary. Examples of the cell nucleating agent include inorganic powders such as talc, mica, zinc borate, calcium carbonate, silica, titanium oxide, gypsum, zeolite, borax, aluminum hydroxide, and carbon; organic powders such as a phosphoric acid-based nucleating agent, a phenolic nucleating agent, an aminebased nucleating agent, and a polyfluoroethylene-based resin powder. In a case where the cell nucleating agent is added, a content of the cell nucleating agent is preferably 0.01 to 1 parts by mass based on 100 parts by mass of the polypropylene-based resin.

In the dispersing medium release foaming method, it is preferable to add a dispersant to the dispersion medium so that the resin particles heated in the container are not fusion-bonded to each other. The dispersant may be any dispersant as long as the dispersant prevents fusion of the resin particles in the container, and can be used regardless of whether the dispersant is organic or inorganic. However, a fine inorganic substance is preferable from a viewpoint of ease of handling. Examples of the dispersant include a clay mineral such as amsnite, kaolin, mica, clay, and the like. The clay mineral may be natural or synthetic. In addition, examples of the dispersant include aluminum oxide, titanium oxide, basic magnesium carbonate, basic zinc carbonate, calcium carbonate, and iron oxide. As the dispersant, one kind or two or more kinds are used. Among them, the clay mineral is preferably used as the dispersant. The dispersant is preferably added in an amount of about 0.001 to 5 parts by mass per 100 parts by mass of the resin particles.

Note that, in a case where the dispersant is used, an anionic surfactant such as sodium dodecylbenzenesulfonate, sodium alkylbenzenesulfonate, sodium lauryl sulfate, or sodium oleate is preferably used in combination as a dispersion aid. An addition amount of the dispersion aid is preferably 0.001 to 1 parts by mass per 100 parts by mass of the resin particles.

As the blowing agent for expanding the resin particles, a physical blowing agent is preferably used. Examples of the physical blowing agent include an inorganic physical blowing agent and an organic physical blowing agent, and examples of the inorganic physical blowing agent include carbon dioxide, air, nitrogen, helium, argon, and the like. In addition, examples of the organic physical blowing agent include aliphatic hydrocarbons such as propane, butane, and hexane, cyclic aliphatic hydrocarbons such as cyclopentane and cyclohexane, and halogenated hydrocarbons such as chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. Note that, the physical blowing agent may be used alone or in combination of two or more kinds thereof. In addition, the inorganic physical blowing agent and the organic physical blowing agent may be mixed and used. From a viewpoint of environmental load and handleability, the inorganic physical blowing agent is preferably used, and the carbon dioxide is more preferably used. In a case where the organic physical blowing agent is used, it is preferable to use n-butane, i-butane, n-pentane, or i-pentane from a viewpoint of solubility in the polypropylene-based resin and expandability.

The addition amount of the blowing agent based on 100 parts by mass of the resin particles is preferably 0.1 to 30 parts by mass, and more preferably 0.5 to 15 parts by mass.

In a step of producing expanded beads, as a method of impregnating the resin particles with the blowing agent, a method of dispersing the resin particles in the aqueous dispersion medium in the sealed container, injecting the blowing agent while heating, and impregnating the resin particles with the blowing agent is preferably used.

The internal pressure of the sealed container during expanding is preferably 0.5 MPa (G: gauge pressure) or more. On the other hand, the internal pressure of the sealed container is preferably 4.0 MPa (G) or less. Within the above range, the expanded beads can be produced safely without a risk of breakage, explosion, or the like of the sealed container.

By raising the temperature of the aqueous dispersion medium in an expanded bead production step at 1 to 5°C/min, the temperature during the expanding can also be adjusted to an appropriate range.

The expanded beads having the crystal structure in which the melting peak (the resin-intrinsic peak) inherent to a resin and one or more melting peaks (the high-temperature peaks) appear on the high-temperature side thereof in the DSC curve obtained by the differential scanning calorimetry (DSC) are obtained, for example, as follows.

During heating in the expanded bead production step, a first-step holding step of holding at a temperature of (the melting point of the polypropylene-based resin -20°C) or higher and lower than (the melting end temperature of the polypropylene-based resin) for a sufficient time of period, preferably about 10 to 60 minutes is performed. Thereafter, the temperature is adjusted to a temperature of (the melting point of the polypropylene-based resin -15°C) to (the melting end temperature of the polypropylene-based resin +10°C). Then, if necessary, a second-step holding step of holding at that temperature for a more sufficient time of period, preferably about 10 to 60 minutes is performed. Next, by releasing the expandable resin particles containing the blowing agent from inside of the sealed container to a low pressure and expanding the expandable resin particles, the expanded beads having the crystal structure described above can be obtained. The expanding is preferably performed in the sealed container at (the melting point of the polypropylene-based resin -10°C) or higher, and more preferably performed at (the melting point of the polypropylene-based resin) or higher and (the melting point of the polypropylene-based resin +20°C) or lower.

In addition, in the production of expanded beads having a particularly low apparent density, it is possible to perform the two-step expansion method in which the expanded beads are charged into a pressurizable sealed container, pressurized gas such as air is injected into the container to increase the internal pressure of the expanded beads, and the expanded beads are heated in the container using the heating medium such as steam for a predetermined time of period to obtain the expanded beads having a particularly low apparent density.

The molded article can be obtained by in-mold molding of the expanded beads as described above (that is, the in-mold molding method). The in-mold molding method is performed by filling the expanded beads in a mold and heat-molding the expanded beads using the heating medium such as steam. Specifically, after the expanded beads are filled in the mold, the heating medium such as steam is introduced into the mold to heat the expanded beads to be secondarily expanded and fusion-bonded to each other to thereby obtain a molded article given a shape of a molding space.

The molded article is formed by, for example, in-mold molding the expanded beads, and is composed of a large number of the expanded beads fusion-bonded to each other. The molded article has the open cell structure. The open cell structure is a minute space portion communicating with the outside of the molded article. The open cell structure is formed by complicatedly connecting voids formed by allowing the through-holes of a plurality of expanded beads to communicate with each other, voids formed by allowing the through-holes of the expanded beads to communicate with voids formed between the expanded beads, voids formed by allowing the voids between the expanded beads to communicate with each other, open cell portions of the expanded beads constituting the molded article, and the like.

The open cell content of the molded article is 2.5% or more and 12% or less. In a case where the open cell content of the molded article is less than 2.5%, the molded article may be significantly shrunk and deformed in the case of omitting the aging step. On the other hand, in a case where the open cell content of the molded article exceeds 12%, the appearance and rigidity of the molded article may be deteriorated. From the viewpoint of more reliably preventing the dimensional change when the aging step is omitted, the open cell content of the molded article is preferably 3% or more, more preferably 4% or more, and still more preferably 4.5% or more. From a viewpoint that the appearance and rigidity of the molded article can be further improved, the open cell content of the molded article is preferably 10% or less, more preferably 8% or less, still more preferably 7.5% or less, and particularly preferably 6% or less.

From the viewpoint that the dimensional change can be more sufficiently prevented even when the aging step is omitted, the voidage of the molded article is preferably 4% or more, more preferably 4.5% or more, and still more preferably 5% or more. On the other hand, from the viewpoint of further improving the rigidity and the appearance, the voidage of the molded article is preferably 12% or less, more preferably 10% or less, and still more preferably 8% or less. The voidage of the molded article can be measured by the measurement method described above.

The closed cell content of the molded article is 90% or more. In a case where the content is less than 90%, the appearance and rigidity of the molded article may be impaired. From the viewpoint of further improving the appearance and rigidity of the molded article, the closed cell content of the molded article is preferably 91% or more, and more preferably 92% or more.

The closed cell content of the molded article is measured in accordance with ASTM 2865-70 Procedure C. Specifically, the closed cell content of the molded article is measured as follows. To start with, a measurement sample of 2.5 cm in length × 2.5 cm in width × 2.5 cm in height is cut out from the central portion of the molded article, and the geometric volume Va is obtained. Specifically, Va is a value obtained by the vertical dimension [cm] × the horizontal dimension [cm] × the height dimension [cm]. Next, according to Procedure C described in ASTM-D2856-70, the true volume value Vx of the measurement sample is measured by the air-comparison pycnometer (specifically, AccuPyc II 1340 manufactured by Shimadzu Corporation). The closed cell content is calculated by the following formula (VII). Note that, the closed cell contents of the five measurement samples are calculated, and the arithmetic average value thereof is adopted as a result.

$$\text{Closed cell content } (\%) = (\text{Vx} - \text{W}/\rho) \times 100/(\text{Va} - \text{W}/\rho) \dots (\text{VII})$$

Vx: the true volume of the measurement samples measured by the above method, that is, the sum of the volume of the resin constituting the measurement samples and the total volume of the cells in the closed cell portion in the measurement samples (unit: $cm^3$)

Va: a geometric volume of the measurement samples (unit: $cm^3$)

W: the weight of the measurement samples (unit: g)

The density of the molded article is preferably 10 $kg/m^3$ or more and 100 $kg/m^3$ or less. In this case, the lightweight property and rigidity of the molded article can be improved in a well-balanced manner. From the viewpoint of further improving the rigidity of the molded article, the density of the molded article is more preferably 20 $kg/m^3$ or more, and still more preferably 25 $kg/m^3$ or more. From the viewpoint of further improving the lightweight property of the molded article, the density of the molded article is more preferably 80 $kg/m^3$ or less, and still more preferably 50 $kg/m^3$ or less. The density of the molded article is calculated by dividing the weight (g) of the molded article by the volume (L) obtained from the outer dimension of the molded article and performing unit conversion. Note that, for example, in a case where the molded article has a complicated shape at least partially, and it is not easy to obtain the volume from the outer dimension of the molded article, the volume of the molded article can be obtained by a submersion method.

Conventionally, in a case of producing a molded article having a low density, the molded article is remarkably easily deformed after the demolding, and thus it is particularly difficult to omit the aging step. On the other hand, according to the molded article of expanded beads in the present disclosure, the aging step can be omitted even when the apparent density is small, and the molded article having a desired shape and excellent appearance and rigidity even without aging is obtained. From the viewpoint of effectively exhibiting this effect, the density of the molded article is preferably set to the above range.

From the viewpoint of further improving the mechanical strength, a maximum bending strength of the molded article is preferably 250 kPa or more, more preferably 300 kPa or more, and still more preferably 320 kPa or more. The maximum bending strength can be measured in accordance with JIS K7221-2:2006 with a maximum point of the maximum bending strength of the molded article as the maximum bending strength.

A ratio [S/DE] of the maximum bending strength S of the molded article to a density DE of the molded article is preferably 9 kPa $m^3$/kg or more and 15 kPa $m^3$/kg or less. In this case, an effect of excellent rigidity of the molded article of expanded beads is obtained. From the viewpoint of further improving the rigidity of the molded article, the ratio [S/DE] of the maximum bending strength S of the molded article to the density DE of the molded article is more preferably 9.5 kPa·$m^3$/kg or more, and still more preferably 10 kPa·$m^3$/kg or more. Note that, the density DE of the molded article to be used in the above calculation means the density of the test piece to be subjected to the measurement of the maximum bending strength.

The molded article is also used as a sound absorbing material, an impact absorbing material, a cushioning material, and the like in various fields such as a vehicle field such as an automobile and a building field.

Examples

Next, the present invention will be described in more detail with reference to the examples, but the present invention is not limited to these examples at all.

The following physical properties were measured and evaluated for the resin, expanded beads, and the molded articles used in the examples and comparative examples. Note that, the physical properties of the expanded beads were measured and evaluated after the state was adjusted by allowing the expanded beads to stand for 24 hours under the conditions of a relative humidity of 50%, 23°C, and 1 atm. In addition, the physical properties of the molded article were measured and evaluated using a molded article molded without performing the aging step. Specifically, in the production of a molded article to be described later, the molded article after the demolding was left to stand for 12 hours under the conditions of a relative humidity of 50%, 23°C, and 1 atm to adjust the state, and the physical properties were measured and evaluated using the molded article.

<Polypropylene-based resin>

Table 1 shows properties and the like of the polypropylene-based resin used for producing the expanded beads. Note that, the ethylene-propylene copolymer and the ethylene-propylene-butene copolymer used in this example are both random copolymers. In addition, the density of the polypropylene-based resin is 900 kg/m$^3$.

[Table 1]

Table 1

| Symbol | Material | Catalyst | Comonomer | Flexural modulus (MPa) | Melting point (°C) | MFR (g/10min) |
|---|---|---|---|---|---|---|
| PP1 | Ethylene-propylene Random Copolymer | Ziegler-Natta | Ethylene 3.1 mass% | 980 | 142 | 8 |
| PP2 | Ethylene-propylene Random Copolymer | Ziegler-Natta | Ethylene 1.4 mass% | 1470 | 153 | 7 |
| PP3 | Mixed Resin of PP1 (80% by weight) and PP2 (20% by weight) | - | Ethylene 2.8 mass% | 1070 | 144 | 8 |
| PP4 | Ethylene-propylene-butene Random Copolymer | Ziegler-Natta | Ethylene 3.1 mass% Butene 3.8 mass% | 650 | 133 | 6 |

(Monomer component content of polupropylene-based resin)

A content of the monomer component in the polypropylene-based resin (specifically, ethylene-propylene copolymer and ethylene-propylene-butene copolymer) was obtained by a known method obtained by the IR spectrum. Specifically, the known method refers to a method described in Polymer Analysis Handbook (edited by Polymer Analysis Research Council, Japan Society for Analytical Chemistry, publication date: January 1995, publishing company: Kinokuniya, page number and item name: 615 to 616 "II. 2.3 2.3.4 Propylene/ethylene copolymer", 618 to 619 "II. 2.3 2.3.5 Propylene/butene copolymer"), that is, the method of quantifying from relationship between a value obtained by correcting the absorbance of ethylene and butene with a predetermined coefficient and a thickness of a film-like test piece. More specifically, to start with, the polypropylene-based resin was hot-pressed in an environment at 180°C to be formed into a film, thereby preparing a plurality of test pieces having different thicknesses. Next, the absorbance at 722 cm$^{-1}$ and 733 cm$^{-1}$ derived from ethylene ($A_{722}$ and $A_{733}$) and the absorbance at 766 cm$^{-1}$ derived from butene ($A_{766}$) were read by measuring the IR spectrum of each test piece. Next, for each test piece, ethylene component content in the polypropylene-based resin was calculated using the following formulae (1) to (3). The value obtained by arithmetically averaging the ethylene component content obtained for each test piece was taken as the ethylene component content (unit: wt%) in the polypropylene-based resin.

$$(K'_{733})_c = 1/0.96\{(K'_{733})_a - 0.268(K'_{722})_a\} \ldots (1)$$

$$(K'_{722})_c = 1/0.96\{(K'_{722})_a - 0.268(K'_{722})_a\} \ldots (2)$$

$$\text{Ethylene component content (\%)} = 0.575 \{(K'_{722})_c + (K'_{733})_c\} \ldots (3)$$

However, in the formulae (1) to (3), $K'_a$ represents an apparent absorption coefficient at each wave number ($K'_a = A/\rho t$), $K'_c$ represents a corrected absorption coefficient, A represents absorbance, $\rho$ represents a density of the resin (unit: g/cm$^3$), and t represents a thickness of the film-like test piece (unit: cm). Note that, the above formulae (1) to (3) can be applied to the random copolymers.

In addition, for each test piece, butene component content in the polypropylene-based resin was calculated using the following formula (4). A value obtained by arithmetically averaging the butene component content obtained for each test piece was taken as the butene component content (%) in the polypropylene-based resin.

$$\text{Butene component content (\%)} = 12.3 \, (A_{766}/L) \, ... \, (4)$$

However, in the formula (4), A represents the absorbance, and L represents the thickness (mm) of the film-like test piece.

(Flexural modulus of polypropylene-based resin)

The polypropylene-based resin was heat-pressed at 230°C to prepare a 4 mm sheet, and a test piece of 80 mm in length × 10 mm in width × 4 mm in thickness was cut out from the sheet. The flexural modulus of this test piece was obtained in accordance with JIS K7171:2008. Note that, a radius R1 of an indenter and a radius R2 of a support base are both 5 mm, a distance between the support points is 64 mm, and a test speed is 2 mm/min.

(Melting point of polypropylene-based resin)

The melting point of the polypropylene-based resin was obtained in accordance with JIS K7121:1987. Specifically, "(2) The case of measurement of melting temperature after a definite heat treatment" was employed as the state adjustment, the DSC curve was obtained by raising the temperature of the test piece subjected to the state adjustment from 30°C to 200°C at the heating rate of 10°C/min, and the vertex temperature of the melting peak was defined as the melting point. Note that, as the measuring device, a heat flux differential scanning calorimeter (manufactured by SII NanoTechnology Inc., model number: DSC7020) was used.

(Melt flow rate of polypropylene-based resin)

The melt flow rate (that is, the MFR) of the polypropylene-based resin was measured under the conditions of the temperature of 230°C and the load of 2.16 kg in accordance with JIS K7210-1:2014.

Table 2 shows properties and the like of the multilayer resin particles and the expanded beads.

[Table 2]

Table 2

| Expanded Bead | | | Expanded Bead A | Expanded Bead B | Expanded Bead C | Expanded Bead D | Expanded Bead E | Expanded Bead F |
|---|---|---|---|---|---|---|---|---|
| Multilayer Resin Bead | Foamed Layer | - | PP1 | PP1 | PP1 | PP3 | PP1 | PP1 |
| | Fusion-bondable Layer | - | PP4 | PP4 | PP4 | PP4 | PP4 | PP4 |
| | Mass Ratio of Fusion-bondable Layer | % | 5 | 5 | 5 | 5 | 5 | 5 |
| | Mass of Resin Particle | mg | 1.5 | 1.5 | 1.5 | 1.5 | 1.5 | 1.5 |
| First Expansion Step | Expansion Temperature | °C | 150.1 | 147 | 146.2 | 153.6 | 149.5 | 146.4 |
| | Carbon Dioxide Pressure | MPa (G) | 2.6 | 3.8 | 3.8 | 2.6 | 1.9 | 3.3 |
| | Bulk Ratio | Times | 19.1 | 38.3 | 36.0 | 18.5 | 17.0 | 45.0 |
| Second Expansion Step | Internal Pressure | MPa (G) | 0.5 | - | - | 0.5 | 0.5 | - |
| | Drum Pressure | MPa (G) | 0.035 | - | - | 0.035 | 0.035 | - |

(continued)

| Expanded Bead | | | Expanded Bead A | Expanded Bead B | Expanded Bead C | Expanded Bead D | Expanded Bead E | Expanded Bead F |
|---|---|---|---|---|---|---|---|---|
| Expanded Bead | Bulk Density | kg/m$^3$ | 24.0 | 23.5 | 25.0 | 23.9 | 25.2 | 20.0 |
| | Bulk Ratio | Times | 37.5 | 38.3 | 36.0 | 37.7 | 35.7 | 45.0 |
| | Apparent Density | kg/m$^3$ | 42.6 | 41.6 | 44.5 | 42.3 | 40.3 | 55.5 |
| | Apparent Density/Bulk Density | - | 1.78 | 1.77 | 1.78 | 1.77 | 1.60 | 2.78 |
| | Closed Cell Content | % | 98.4 | 96.0 | 96.5 | 97.8 | 96.7 | 98.0 |
| | Heat of High-temperature Peak | J/g | 14.5 | 13.4 | 16.5 | 14.4 | 14.0 | 14.9 |
| | Average Hole Diameter of Through-hole d | mm | 0.70 | 0.95 | 0.89 | 0.75 | - | 3.31 |
| | Average Outer Diameter D | mm | 3.69 | 3.98 | 3.63 | 3.80 | 3.71 | 3.78 |
| | d/D | - | 0.19 | 0.24 | 0.25 | 0.20 | - | 0.88 |
| | Average Wall Thickness t | mm | 1.49 | 1.52 | 1.37 | 1.53 | - | 0.23 |
| | t/D | - | 0.40 | 0.38 | 0.38 | 0.40 | - | 0.06 |

(Average hole diameter d of through-hole)

The average hole diameter of the through-holes of the expanded beads was obtained as follows. 100 expanded beads randomly selected from the expanded bead group after the state adjustment were cut perpendicularly to the penetration direction of the through-holes at the position where the area of the cut surface was substantially the maximum. The cut surface of each expanded bead was photographed, and the cross-sectional area (the opening area) of the through-hole portions in the cross-sectional photograph was obtained. The diameter of the virtual perfect circle having the same area as the cross-sectional area of the through-hole portions was calculated, and the arithmetic average thereof was taken as the average hole diameter (d) of the through-holes of the expanded beads.

(Average outer diameter D)

The average outer diameter of the expanded beads was obtained as follows. 100 expanded beads randomly selected from the expanded bead group after the state adjustment were cut perpendicularly to the penetration direction of the through-holes at the position where the area of the cut surface was substantially the maximum. The cut surface of each expanded bead was photographed to obtain the cross-sectional area of the expanded bead (including the opening portion of the through-hole). The diameter of the virtual perfect circle having the same area as the cross-sectional area of the expanded bead was calculated, and the arithmetic average value thereof was taken as the average outer diameter (D) of the expanded beads.

(Average wall thickness t)

The average wall thickness of the expanded beads was obtained by the following formula (5).

$$\text{Average wall thickness t} = (\text{average outer diameter D} - \text{average hole diameter d})/2 \ ... \ (5)$$

(Bulk density and bulk ratio)

The bulk density of the expanded beads was obtained as follows. The expanded beads were randomly taken out from the expanded bead group after the state adjustment, placed in the measuring cylinder having a volume of 1 L, a large number of the expanded beads were accommodated up to a scale of 1 L so as to be in a natural deposition state, the mass W2 [g] of the accommodated expanded beads was divided by the accommodation volume V2 (1[L]) (W2/V2), and the unit was converted to [kg/m$^3$], whereby the bulk density of the expanded beads was obtained. In addition, the bulk ratio [times] of the expanded beads was obtained by dividing the density [kg/m$^3$] of the resin constituting the foamed layer of the expanded beads by the bulk density [kg/m$^3$] of the expanded beads.

(Apparent density)

The apparent density of the expanded beads was obtained as follows. To start with, the measuring cylinder containing ethanol at a temperature of 23°C was prepared, and an arbitrary amount of the expanded bead group (a mass W1 [g] of the expanded bead group) after the state adjustment was immersed in ethanol in the measuring cylinder using the wire mesh. Then, in consideration of the volume of the wire mesh, the volume V1 [L] of the expanded bead group read from the increase in water level was measured. The apparent density of the expanded beads was obtained by dividing the mass W1 [g] of the expanded bead group placed in the measuring cylinder by the volume V1 [L] (W1/V1) and converting the unit to [kg/m$^3$].

(Closed cell content)

The closed cell content of the expanded beads was measured using the air-comparison pycnometer based on ASTM-D2856-70 Procedure C. Specifically, it was obtained as follows. Using the expanded beads having the bulk volume of about 20 cm$^3$ after the state adjustment as the measurement sample, the apparent volume Va was accurately measured by the ethanol immersion method as to be described below. The measurement sample whose apparent volume Va had been measured was sufficiently dried, and then the true volume value Vx of the measurement sample measured by AccuPyc II 1340 manufactured by Shimadzu Corporation was measured in accordance with Procedure C described in ASTM-D2856-70. Then, based on these volume values Va and Vx, the closed cell content was calculated by the following formula (5), and the average value of the five samples (N = 5) was taken as the closed cell content of the expanded beads.

$$\text{Closed cell content } (\%) = (Vx - W/\rho) \times 100/(Va - W/\rho) \ldots (5)$$

Provided that

Vx: the true volume of the expanded beads measured by the above method, that is, the sum of the volume of the resin constituting the expanded beads and the total volume of the closed cell portion in the expanded beads (unit: $cm^3$),
Va: the apparent volume (unit: $cm^3$) of expanded beads measured from the increase in water level when expanded beads are immersed in the measuring cylinder containing ethanol,
W: the weight of the measurement sample for expanded beads (unit: g), and
$\rho$: the density of resin constituting expanded beads (unit: $g/cm^3$).

(Heat of high-temperature peak of expanded beads)

One expanded bead was collected from the expanded bead group after the state adjustment. Using the expanded bead as the test piece, the DSC curve was obtained when the test piece was heated from 23°C to 200°C at the heating rate of 10°C/min by the differential scanning calorimeter (specifically, DSC.Q 1000 manufactured by TA Instruments). In the DSC curve, the area of the high-temperature peak was obtained, and this was taken as the heat of high-temperature peak.
The above measurement was performed on five expanded beads, and the arithmetic average value was shown in Table 2.

<Molded article>

Tables 3 and 4 show the properties and the like of the molded article.

[Table 3]

Table 3

| Example No./Comparative Example No. | | | Example 1 | Example 2 | Example 3 | Example 4 |
|---|---|---|---|---|---|---|
| Expanded Bead | | | Expanded Bead A | Expanded Bead B | Expanded Bead C | Expanded Bead D |
| Molding Step | Pre-pressurization Performed or Not Performed | - | Not Performed | Not Performed | Not Performed | Not Performed |
| | Bead Internal Pressure | MPa(G) | - | - | - | - |
| | Cracking Width | % | 20 | 20 | 20 | 20 |
| | Molding Pressure | MPa(G) | 0.22 | 0.22 | 0.22 | 0.22 |

EP 4 342 936 A1

(continued)

| Example No./Comparative Example No. | | | Example 1 | Example 2 | Example 3 | Example 4 |
|---|---|---|---|---|---|---|
| Expanded Bead | | | Expanded Bead A | Expanded Bead B | Expanded Bead C | Expanded Bead D |
| Molded Article (Physical Property, Evaluation) | Corrected Open Cell Content | % | 3.9 | 5.3 | 5.3 | 4.1 |
| | Closed Cell Content | % | 92.3 | 91.1 | 90.8 | 91.7 |
| | Density of Molded Article | kg/m³ | 34 | 33 | 36 | 34 |
| | Voidage | % | 12.0 | 6.6 | 9.9 | 11.9 |
| | Evaluation of Non-aging Moldability | - | ○ | ○ | ○ | ○ |
| | Evaluation of Appearance | - | A | A | A | A |
| | Compressive Stress of 50% | kPa | 239 | 223 | 247 | 236 |
| | Density (compression) of Cut-out Molded Article | kg/m³ | 33 | 32 | 36 | 33 |
| | Maximum Bending Strength S | kPa | 353 | 327 | 372 | 348 |
| | Density (bending) of Cut-out Molded Article DE | kg/m³ | 33 | 32 | 36 | 33 |
| | S/DE | kPa·m³/kg | 10.6 | 10.2 | 10.3 | 10.5 |

[Table 4]

Table 4

| Example No./Comparative Example No. | | | Comparative Example 1 | Comparative Example 2 | Comparative Example 3 | Comparative Example 4 | Comparative Example 5 | Comparative Example 6 |
|---|---|---|---|---|---|---|---|---|
| Expanded Bead | | | Expanded Bead E | Expanded Bead F | Expanded Bead F | Expanded Bead A | Expanded Bead A | Expanded Bead A |
| Molding Step | Pre-pressurization Performed or Not Performed | - | Performed | Not Performed | Performed | Performed | Performed | Performed |
| | Bead Internal Pressure | MPa(G) | 0.15 | - | 0.15 | 0.15 | 0.08 | 0.15 |
| | Cracking Width | % | 10 | 20 | 20 | 10 | 20 | 20 |
| | Molding Pressure | MPa(G) | 0.28 | 0.22 | 0.22 | 0.3 | 0.22 | 0.3 |

(continued)

| Example No./Comparative Example No. | | | Comparative Example 1 | Comparative Example 2 | Comparative Example 3 | Comparative Example 4 | Comparative Example 5 | Comparative Example 6 |
|---|---|---|---|---|---|---|---|---|
| Expanded Bead | | | Expanded Bead E | Expanded Bead F | Expanded Bead F | Expanded Bead A | Expanded Bead A | Expanded Bead A |
| Molded Article (Physical Property, Evaluation) | Corrected Open Cell Content | % | 0.4 | 35.8 | 17.4 | 0.6 | 0.9 | 0.3 |
| | Closed Cell Content | % | 96.7 | 60.9 | 79.5 | 96.3 | 97.0 | 96.8 |
| | Density of Molded Article | kg/m$^3$ | 30 | 28 | 30 | 30 | 33 | 33 |
| | Voidage | % | 5.4 | 47.2 | 20.5 | 8.1 | 10.0 | 3.5 |
| | Evaluation of Non-aging Moldability | - | × | ○ | ○ | × | × | × |
| | Evaluation of Appearance | - | A | C | C | A | A | A |
| | Compressive Stress of 50% | kPa | 231 | 151 | 174 | 207 | 238 | 245 |
| | Density (compression) of Cut-out Molded Article | kg/m$^3$ | 29 | 28 | 28 | 28 | 33 | 32 |
| | Maximum Bending Strength S | kPa | 326 | 201 | 245 | 287 | 349 | 357 |
| | Density (bending) of Cut-out Molded Article DE | kg/m$^3$ | 29 | 28 | 28 | 28 | 33 | 32 |
| | S/DE | kPa·m$^3$/kg | 11.1 | 7.1 | 8.7 | 10.3 | 10.7 | 11.1 |

(Pre-pressurization step)

In a case where the pre-pressurization step was performed before molding the expanded beads, the pre-pressurization was performed as follows. Specifically, the expanded beads were placed in the sealed container, the expanded beads were pressurized with compressed air, and the internal pressures shown in Tables 3 and 4 were applied to the expanded beads before molding in advance. Note that, the internal pressure of the expanded beads is a value measured as follows. Internal pressure P (MPa (G)) of the expanded beads was calculated by a formula P = (W/M) $\times$ R $\times$ T $\div$ V, where Q (g) was the weight of the expanded bead group in a state where the internal pressure was increased immediately before filling into the mold, U (g) was the weight of the expanded bead group after a lapse of 48 hours, and a difference between the weight Q (g) and U (g) was an increased air amount W (g). However, in the formula, M represents a molecular weight of air, R represents a gas constant, T represents an absolute temperature, V represents a volume (L) obtained by subtracting a volume of the base material resin in the expanded bead group from an apparent volume of the expanded bead group, and in this example, M = 28.8 (g/mol), R = 0.0083 (MPa·L/(K·mol)), and T = 296 (K).

Note that, in a case where the pre-pressurization step was not performed, a symbol "-" was displayed in a bead internal pressure column in the table. In this case, the bead internal pressure is 0 MPaG (that is, the internal pressure is equal to an atmospheric pressure).

(Open cell content)

Open cell content (that is, the corrected open cell content) was measured according to ASTM 2856-70 Procedure B. As the measuring device, the dry automatic densitometer (specifically, AccuPyc II 1340 manufactured by Shimadzu Corporation) was used. To start with, the state of the molded article was adjusted by allowing the molded article to stand at 23°C for 12 hours. Next, the first test piece having a cubic shape of 2.5 cm in length $\times$ 2.5 cm in width $\times$ 2.5 cm in height was cut out from the central portion of the molded article, and its geometric volume Va [unit: cm$^3$] was measured. Specifically, Va is a value obtained by the vertical dimension [cm] $\times$ the horizontal dimension [cm] $\times$ the height dimension [cm]. A true volume value V1 [unit: cm$^3$] of the first test piece was measured with the dry automatic densitometer. Next, the first test piece was divided into 8 equal parts to obtain a cubic second test piece having a size of 1.25 cm in length $\times$ 1.25 cm in width $\times$ 1.25 cm in height. Next, a true volume value V2 [unit: cm$^3$] of the second test piece was measured with the dry automatic densitometer. Note that, the true volume V2 of the second test piece is a total value of the true volumes of the eight pieces cut out from the first test piece. The open cell content Co [unit: %] is calculated by the following formula (6). Five first test pieces were cut out from the molded article, the open cell content was calculated by the above method, and the arithmetic average value thereof was used as a result.

$$\mathrm{Co = (Va\text{-}2V1+V2)\times100/Va} \ ... \ (6)$$

(Closed cell content)

The closed cell content of the molded article was measured according to ASTM 2865-70 Procedure C. Specifically, the measurement was performed as follows. To start with, the measurement sample of 2.5 cm in length $\times$ 2.5 cm in width $\times$ 2.5 cm in height was cut out from the central portion of the molded article, and the geometric volume Va was obtained. Specifically, Va is a value obtained by the vertical dimension [cm] $\times$ the horizontal dimension [cm] $\times$ the height dimension [cm]. Next, according to Procedure C described in ASTM-D2856-70, the true volume value Vx of the measurement sample was measured by the air-comparison pycnometer (specifically, AccuPyc II 1340 manufactured by Shimadzu Corporation). The closed cell content was calculated by the following formula (7). Note that, the closed cell contents of the five measurement samples were calculated, and the arithmetic average value thereof was adopted as a result.

$$\mathrm{Closed \ cell \ content \ (\%) = (Vx - W/\rho) \times 100/(Va - W/\rho)} \ ...(7)$$

Vx: the true volume of the measurement samples measured by the above method, that is, the sum of the volume of the resin constituting the measurement samples and the total volume of the cells in the closed cell portion in the measurement samples (unit: cm$^3$)

Va: the geometric volume of the measurement samples (unit: cm$^3$)

W: the weight of the measurement samples (unit: g)

(Density of molded article)

The density (kg/m³) of the molded article was calculated by dividing the weight (g) of the molded article by the volume (L) obtained from the outer dimension of the molded article and converting the value into a unit.

(Evaluation of non-aging moldability)

An evaluation of the non-aging moldability was performed by evaluating the fusion bondability and recoverability of the molded article without performing the aging step of leaving the molded article to stand for a predetermined time of period in the high-temperature atmosphere adjusted to a temperature of about 60°C to 80°C after demolding from the mold. Specifically, in the production of a molded article, which is described later, the molded article left to stand at 23°C for 12 hours after demolded was used to evaluate the fusion bondability and recoverability, which are described later, and a case of obtaining a molded article having fusion bondability and recoverability of which the evaluation results were acceptable was evaluated as "Good", and other cases were evaluated as" Poor".

(Fusion bondability)

The molded article was bent and broken, the number C1 of expanded beads present on a broken surface and number C2 of broken expanded beads were obtained, and a ratio of the number of broken expanded beads to the number of expanded beads present on the broken surface (that is, a material fracture rate) was calculated. The material fracture rate is calculated from a formula of C2/C1 × 100. The above measurement was performed five times using different test pieces, and the material fracture rate was obtained. When an arithmetic average value of the material fracture rate was 90% or more, it was defined as acceptable.

(Recoverability)

A thickness near four corners (specifically, 10 mm inside from the corner in a center direction) and a thickness at a center (a portion equally divided into two in both a longitudinal direction and a lateral direction) of a molded article obtained using a flat plateshaped mold of 300 mm in length, 250 mm in width, and 60 mm in thickness were measured, respectively. Next, a ratio (unit:%) of a thickness of the thinnest portion to a thickness of the thickest portion among the measured portions was calculated, and the case where the ratio was 95% or more was regarded as acceptable.

(Evaluation of appearance)

Evaluation was performed based on the following criteria.

A: The molded article has a good surface state in which the inter-bead voids are small on the surface of the molded article and irregularities caused by the through-holes and the like are not noticeable.
B: The irregularities due
to the inter-bead voids and/or the through-holes, and the like are slightly observed on the surface of the molded article.
C: The irregularities due to the inter-bead voids and/or the through-holes, and the like are remarkably observed on the surface of the molded article.

(Compressive stress of 50%)

A test piece of 50 mm in length × 50 mm in width × 25 mm in thickness was cut out from the central portion of the molded article so that a skin layer on the surface of the molded article was not included in the test piece. According to JIS K 6767:1999, a compression test was performed at a compression rate of 10 mm/min to obtain 50% compressive stress of the molded article. Note that, the density of the test piece used for the measurement of the 50% compressive stress was obtained in the same manner as in the measurement of the density of the molded article, and the "density (compression) of a cut-out molded article" is shown in Tables 3 and 4.

(Maximum bending strength)

The bending strength was measured in accordance with JIS K7221-2:2006, and a maximum point of the bending strength of the molded article was measured as the maximum bending strength. Specifically, a test piece of 120 mm in length, 25 mm in width, and 20 mm in thickness was cut out from the molded article so as not to include the skin layer on the surface. Using this test piece, the bending strength was measured according to JIS K7221-2:2006 except that a lowering speed of a pressurizing wedge was set to 10 mm/min, the distance between the support points was set to 100 mm, a radius of a tip of the support base was set to 5 mm, and a radius of a tip of the pressurizing wedge was set to 5 mm. Note that, the density of the test piece used for the measurement of the maximum bending strength was obtained in the same manner as in the measurement of the density of the molded article, and the "density (bending) of the cut-out molded article" is shown in Tables 3 and 4.

(Voidage of molded article)

The voidage of the molded article was obtained as follows.

A test piece having the rectangular parallelepiped shape (20 mm in length × 100 mm in width × 20 mm in height) was cut out from the central portion of the molded article. The test piece was immersed in the measuring cylinder containing ethanol, and the true volume Vc [L] of the test piece was obtained from the amount of increase in the liquid level of ethanol. In addition, the apparent volume Vd [L] was obtained from the outer dimension of the test piece. The voidage of the molded article was obtained from the obtained true volume Vc and the apparent volume Vd by the following formula (8).

$$\text{Voidage (\%)} = [(\text{Vd} - \text{Vc})/\text{Vd}] \times 100 \ ... \ (8)$$

Hereinafter, a method for producing the expanded beads and a molded article in Examples 1 to 6 and Comparative Examples 1 to 7 will be described.

(Example 1)

<Production of polypropylene-based expanded beads (expanded beads A)>

Polypropylene-based resin 1 (abbreviated as PP1) was melt-kneaded at a maximum set temperature of 245°C in the extruder for forming the core layer to obtain the resin melt-kneaded product. Note that, PP1 is an ethylene-propylene random copolymer and has an ethylene component content of 3.1% by mass. Characteristics of PP1 are shown in Table 1. In addition, polypropylene-based resin 4 (abbreviated as PP4) was melt-kneaded at the maximum set temperature of 245°C in the extruder for forming the fusion-bondable layer to obtain the resin melt-kneaded product. Next, the respective resin melt-kneaded products were extruded from the extruder for forming the core layer and the extruder for forming the fusion-bondable layer from the tip of a coextrusion die having a small hole for forming the through-holes. At this time, the respective resin melt-kneaded products were joined in a die to form the sheath-core composite including the tubular core layer in the non-foamed state and the fusion-bondable layer in the non-foamed state covering the outer surface of the tubular core layer. The composite was extruded from pores of the spinneret attached to the tip of the extruder into the strand having a tubular shape with the through-holes, and the strand was water-cooled with cold water having a water temperature adjusted to 10°C while the strand was taken up, and then cut with the pelletizer so that a mass was about 1.5 mg each. In this way, the multilayer resin particles composed of the tubular core layer having the through-holes and the fusion-bondable layer covering the core layer were obtained. Note that, in the production of the multilayer resin particles, zinc borate as a cell adjusting agent was supplied to the extruder for forming the core layer, and 500 ppm by mass of zinc borate was contained in the polypropylene-based resin.

1 kg of the multilayer resin particles was put in a 5 L sealed container together with 3 L of water as the dispersion medium, and 0.3 parts by mass of kaolin as the dispersant and 0.004 parts by mass of a surfactant (sodium alkylbenzene sulfonate) were added to 100 parts by mass of the multilayer resin particles in the sealed container. Carbon dioxide as the blowing agent was added to the inside of the sealed container, the sealed container was then sealed, and the inside of the sealed container was heated to an expansion temperature of 150.1°C while being stirred. The pressure inside the container (that is, an impregnation pressure and a carbon dioxide pressure) at this time was 2.6 MPa (G). After holding at the same temperature (that is, 150.1°C) for 15 minutes, container contents were released to the atmospheric pressure to obtain the expanded beads. The expanded beads were dried at 23°C for 24 hours.

Subsequently, the expanded beads were placed in a pressure-resistant container, and air was pressed into the pressure-resistant container to increase the pressure in the container, and air was impregnated into the cells to increase the internal pressure of the cells in the expanded beads. Next, steam was supplied to the expanded beads (first-step expanded beads) taken out from the pressure-resistant container so that a pressure (that is, a drum pressure) in the pressure-resistant container was a pressure shown in Table 2, and the expanded beads were heated under the atmospheric pressure. The pressures (that is, the internal pressures) in the cells in the first-step expanded beads taken out from the pressure-resistant container were values shown in Table 2. As described above, the apparent density of the first-step expanded beads was reduced to obtain the expanded beads (second-step expanded beads). In this way, expanded beads having a bulk ratio of 37.5 were obtained. This is referred to as expanded beads A.

<Production of molded article>

In the production of the molded article, the expanded beads dried at 23°C for 24 hours were used. Next, an exhaust step was performed in which the expanded beads were filled in a flat-plate mold (which is specifically a metal die) of 300 mm in length × 250 mm in width × 60 mm in thickness and the cracking width was adjusted to 20% (that is, 12 mm), the metal die was clamped, and steam was supplied from both surfaces of the metal die for 5 seconds to preheat. Thereafter, steam was supplied from one surface side of the metal die to perform one-side heating until a pressure lower than a predetermined molding pressure by 0.08 MPa (G) was reached. Next, steam was supplied from the other surface side of the metal die until a pressure lower than the predetermined molding pressure by 0.04 MPa (G) was reached to perform the one-side heating, and then heating (that is, main heating) was performed until the predetermined molding pressure was reached. After completion of the heating, the pressure was released, and the molded article was cooled with water until the surface pressure by an expanding force of the molded article reached 0.04 MPa (G), and then demolded to obtain the molded article. The open cell content of the molded article thus produced was 3.9%. Note that, the predetermined molding pressure was set as a value at which the molding pressure is the lowest among the molding pressures at which an acceptable product can be obtained in the evaluation of the fusion bondability described above.

(Example 2)

Expanded beads (that is, expanded beads B) having a bulk ratio of 38.3 were obtained in the same manner as in the production of the expanded beads A except that the expansion temperature and the carbon dioxide pressure were changed to the values shown in Table 2 and the second-step expansion was not performed. The molded article was obtained in the same manner as in Example 1 except that the expanded beads B were used. The open cell content of the molded article thus produced was 5.3%.

(Example 3)

Expanded beads (that is, expanded beads C) having a bulk ratio of 36.0 were obtained in the same manner as in the production of the expanded beads A except that the expansion temperature and the carbon dioxide pressure were changed to the values shown in Table 2 and the second-step expansion was not performed. In addition, the molded article was obtained in the same manner as in Example 1 except that the expanded beads C were used. The open cell content of the molded article thus produced was 5.3%.

(Example 4)

Expanded beads (that is, expanded beads D) having a bulk ratio of 37.7 times were obtained in the same manner as in the production of the expanded beads A except that a mixed resin PP3 obtained by mixing PP1 and PP2 at a mixing ratio of 80% by weight: 20% by weight was used as the polypropylene-based resin for forming the foamed layer and the expansion temperature was changed to the value shown in Table 2. In addition, the molded article was obtained in the same manner as in Example 1 except that the expanded beads D were used. The open cell content of the molded article thus produced was 4.1%.

(Example 5)

Expanded beads (that is, expanded beads G) having a bulk ratio of 18.0 times were obtained in the same manner as in the production of the expanded beads A except that the expansion temperature was changed to the value shown in Table 2 and the second-step expansion was not performed. In addition, the molded article was obtained in the same manner as in Example 1 except that the expanded beads G were used. The open cell content of the molded article thus produced was 5.1%.

(Example 6)

The molded article was obtained in the same manner as in Example 1 except that in the molding step, the pre-pressurization was performed so that the internal pressure of the expanded beads before being filled in the mold became the value shown in Table 4, and the cracking width was changed to the value shown in Table 4. The open cell content of the molded article thus produced was 3.5%.

(Comparative Example 1)

Expanded beads (that is, expanded beads E) having a bulk expansion of 35.7 were obtained in the same manner as in the production of the expanded beads A except that the resin particles having no the through-holes were produced during producing the multilayer resin particles, and the expansion temperature and the carbon dioxide pressure were changed to the values shown in Table 2. In addition, the molded article was obtained in the same manner as in Example 1 except that the expanded beads E were used, and in the molding step, the pre-pressurization was performed so that the internal pressure of the expanded beads before filling the beads into the mold became the value shown in Table 4, and the cracking width and the molding pressure were changed to the values shown in Table 4. The open cell content of the molded article thus produced was 0.4%.

Note that, since expanded beads having no through-holes as in this example have poor passage of steam during the molding, the appearance and rigidity of the molded article are significantly poor in a case where the pre-pressurization is not performed. Accordingly, in this example, the pre-pressurization was performed as described above.

(Comparative Example 2)

Expanded beads (that is, expanded beads F) having a bulk ratio of 45.0 times were obtained in the same manner as in Example 1 except that an inner diameter of a small hole of the coextrusion die provided with the small hole for forming the through-holes during producing the multilayer resin particles was changed, the expansion temperature and the carbon dioxide pressure were changed to the values shown in Table 2, and the second-step expansion was not performed. In addition, the molded article was obtained in the same manner as in Example 1 except that the expanded beads F were used. The open cell content of the molded article thus produced was 35.8%.

(Comparative Example 3)

The molded article was obtained in the same manner as in Comparative Example 2 except that in the molding step, the pre-pressurization was performed so that the internal pressure of the expanded beads before being filled in the mold became the value shown in Table 4. The open cell content of the molded article thus produced was 17.4%.

(Comparative Example 4)

The molded article was obtained in the same manner as in Example 1 except that in the molding step, the pre-pressurization was performed so that the internal pressure of the expanded beads before being filled into the mold became the value shown in Table 4, and the cracking width and the molding pressure were changed to the values shown in Table 4. The open cell content of the molded article thus produced was 0.6%.

(Comparative Example 5)

In addition, the molded article was obtained in the same manner as in Example 1 except that in the molding step, the pre-pressurization was performed so that the internal pressure of the expanded beads before being filled in the mold became the value shown in Table 4. The open cell content of the molded article thus produced was 0.9%.

(Comparative Example 6)

In addition, the molded article was obtained in the same manner as in Example 1 except that in the molding step, the pre-pressurization was performed so that the internal pressure of the expanded beads before being filled into the mold became the value shown in Table 4, and the molding pressure was changed to the value shown in Table 4. The open cell content of the molded article thus produced was 0.3%.

(Comparative Example 7)

Expanded beads (that is, expanded beads H) having a bulk ratio of 36.7 times were obtained in the same manner as in Example 1 except that the inner diameter of the small hole of the coextrusion die provided with the small hole for forming the through-holes during producing the multilayer resin particles was changed, the expansion temperature and the carbon dioxide pressure were changed to the values shown in Table 2, and the second-step expansion was not performed. In addition, the molded article was obtained in the same manner as in Example 1 except that the expanded beads H were used. The open cell content of the molded article thus produced was 15.0%.

As can be understood from Tables 2 to 3, according to Examples 1 to 6, the molded article having a desired shape and being excellent in appearance and rigidity can be produced even when the aging step is omitted.

On the other hand, as understood from Table 2 and Table 4, in Comparative Example 1, the open cell content of the molded article was too low because the molded article was produced using the expanded beads having no through-holes. As a result, in a non-aging molding, the significant shrinkage and deformation of the molded article occurred (that is, the recoverability is not acceptable), and the good molded article could not be obtained.

In Comparative Example 2, the open cell content of the molded article was excessively high because the molded article was produced using expanded beads having an excessively large average hole diameter of the through-holes. As a result, the appearance of the molded article was poor, and the rigidity was also deteriorated.

Comparative Example 3 is an example in which molding was performed so that the open cell content was smaller than that in Comparative Example 2. In Comparative Example 3, although the open cell content could be reduced, the reduction was insufficient, and as a result, the molded article having good appearance and rigidity could not be obtained.

Comparative Example 4 is an example in which the molded article was produced using the same expanded beads as in Example 1 under different molding conditions. In Comparative Example 4, since the open cell content of the molded article was too low, the significant shrinkage and deformation of the molded article occurred in the non-aging molding (that is, the recoverability is not acceptable), and the good molded article could not be obtained.

In Comparative Example 5, similarly to Comparative Example 4, expanded beads similar to those in Example 1 were used, and the molded article was produced under different molding conditions. In Comparative Example 5, the open cell content of the molded article was higher than that in Comparative Example 4, but the open cell content was still too low, so that in the non-aging molding, the significant shrinkage and deformation of the molded article occurred (that is, the recoverability is not acceptable), and the good molded article could not be obtained.

In Comparative Example 6, similarly to Comparative Example 4, expanded beads similar to those in Example 1 were used, and the molded article was produced under different molding conditions. In Comparative Example 6, the open cell content of the molded article is lower than that in Comparative Example 4. In Comparative Example 6, since the open cell content of the molded article was too low, the significant shrinkage and deformation of the molded article occurred in the non-aging molding (that is, the recoverability is not acceptable), and the good molded article could not be obtained.

In Comparative Example 7, although the average hole diameter of the through-holes of the expanded beads was smaller than that in Comparative Example 2, the molded article was produced using the expanded beads in which the average hole diameter of the through-holes was still too large, so that the open cell content of the molded article was too high. As a result, the appearance of the molded article was poor, and the rigidity was also deteriorated.

## Claims

1. A method for producing a molded article of polypropylene-based resin expanded beads by filling tubular polypropylene-based resin expanded beads each having a through-hole in a mold and supplying a heating medium to the mold to fusion-bond the expanded beads to each other, wherein

   the expanded beads have a foamed layer constituted by a polypropylene-based resin,
   a closed cell content of the expanded beads is 90% or more,
   an average hole diameter d of the through-holes of the expanded beads is less than 1 mm, and a ratio [d/D] of the average hole diameter d to an average outer diameter D of the expanded beads is 0.4 or less, and
   an open cell content of the molded article of expanded beads is 2.5% or more and 12% or less.

2. The method for producing a molded article of polypropylene-based resin expanded beads according to claim 1, wherein the open cell content of the molded article of expanded beads is 4% or more and 8% or less.

3. The method for producing a molded article of polypropylene-based resin expanded beads according to claim 1 or 2, wherein a density of the molded article of expanded beads is 10 kg/m$^3$ or more and 100 kg/m$^3$ or less.

4. The method for producing a molded article of polypropylene-based resin expanded beads according to any one of claims 1 to 3, wherein an average outer diameter D of the expanded beads is of 2 mm or more and 5 mm or less.

5. The method for producing a molded article of polypropylene-based resin expanded beads according to any one of claims 1 to 4, wherein an average wall thickness t of the expanded beads, which is represented by the following formula (A), is 1.2 mm or more and 2 mm or less:

$$\text{average wall thickness } t = (\text{the average outer diameter } D - \text{the average hole}$$

$$\text{diameter } d)/2 \dots (A)$$

6.  The method for producing a molded article of polypropylene-based resin expanded beads according to any one of claims 1 to 5, wherein a flexural modulus of the polypropylene-based resin constituting the foamed layer is 800 MPa or more and less than 1200 MPa.

7.  The method for producing a molded article of polypropylene-based resin expanded beads according to any one of claims 1 to 6, wherein the polypropylene-based resin constituting the foamed layer is an ethylene-propylene random copolymer.

8.  The method for producing a molded article of polypropylene-based resin expanded beads according to any one of claims 1 to 7, wherein the expanded beads have a fusion-bondable layer which covers the foamed layer.

9.  The method for producing a molded article of polypropylene-based resin expanded beads according to any one of claims 1 to 8, wherein an internal pressure of the expanded beads filled in the mold is 0 MPa (G) or more and 0.05 MPa (G) or less.

10. A molded article of polypropylene-based resin expanded beads, the molded article being formed by fusion-bonding tubular polypropylene-based resin expanded beads each having a through-hole with one another, wherein

    a closed cell content of the molded article of expanded beads is 90% or more, and
    an open cell content of the molded article of expanded beads is 2.5% or more and 12% or less.

11. The molded article of polypropylene-based resin expanded beads according to claim 10, wherein the open cell content of the molded article of expanded beads is 4% or more and 8% or less.

12. The molded article of polypropylene-based resin expanded beads according to claim 10 or 11, wherein a ratio [S/DE] of a maximum bending strength S of the molded article of expanded beads to a density DE of the molded article of expanded beads is 9 kPa·m$^3$/kg or more and 15 kPa·m$^3$/kg or less.

FIG. 1

FIG. 2

FIG. 3

FIG. 4

## INTERNATIONAL SEARCH REPORT

| International application No. |
|---|
| **PCT/JP2022/024273** |

### A. CLASSIFICATION OF SUBJECT MATTER

***C08J 9/228***(2006.01)i
FI:  C08J9/228 CES

According to International Patent Classification (IPC) or to both national classification and IPC

### B. FIELDS SEARCHED

Minimum documentation searched (classification system followed by classification symbols)

C08J9/00 - 9/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-307177 A (JSP CORP) 09 November 2006 (2006-11-09)<br>entire text | 1-12 |
| A | WO 2010/150466 A1 (JSP CORP) 29 December 2010 (2010-12-29)<br>entire text | 1-12 |
| A | WO 2018/225649 A1 (KANEKA CORPORATION) 13 December 2018 (2018-12-13)<br>entire text | 1-12 |
| A | JP 2014-040507 A (JSP CORP) 06 March 2014 (2014-03-06)<br>entire text | 1-12 |
| A | WO 2013/137344 A1 (KANEKA CORPORATION) 19 September 2013 (2013-09-19)<br>entire text | 1-12 |
| A | JP 2012-102201 A (JSP CORP) 31 May 2012 (2012-05-31)<br>entire text | 1-12 |
| A | JP 2018-131620 A (ASAHI KASEI CORP) 23 August 2018 (2018-08-23)<br>entire text | 1-12 |

☑ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/024273** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/235290 A1 (JSP CORP) 26 November 2020 (2020-11-26)<br>entire text | 1-12 |
| A | JP 11-247322 A (JSP CORP, ASAHI GLASS MATEKKUSU KK) 14 September 1999 (1999-09-14)<br>entire text | 1-12 |
| A | US 2020/0181351 A1 (NIKE, INC.) 11 June 2020 (2020-06-11)<br>whole document | 1-12 |

Form PCT/ISA/210 (second sheet) (January 2015)

**INTERNATIONAL SEARCH REPORT**
**Information on patent family members**

International application No.

**PCT/JP2022/024273**

| Patent document cited in search report | | | Publication date (day/month/year) | Patent family member(s) | | | Publication date (day/month/year) |
|---|---|---|---|---|---|---|---|
| JP | 2006-307177 | A | 09 November 2006 | US whole document EP whole document | 2006/0223897 1707592 | A1 A2 | |
| WO | 2010/150466 | A1 | 29 December 2010 | US whole document EP whole document | 2012/0100376 2447311 | A1 A1 | |
| WO | 2018/225649 | A1 | 13 December 2018 | EP whole document | 3636699 | A1 | |
| JP | 2014-040507 | A | 06 March 2014 | (Family: none) | | | |
| WO | 2013/137344 | A1 | 19 September 2013 | US whole document EP whole document | 2015/0057387 2826812 | A1 A1 | |
| JP | 2012-102201 | A | 31 May 2012 | US whole document | 2012/0115968 | A1 | |
| JP | 2018-131620 | A | 23 August 2018 | US whole document EP whole document | 2020/0032023 3581613 | A1 A1 | |
| WO | 2020/235290 | A1 | 26 November 2020 | TW whole document | 202106778 | A | |
| JP | 11-247322 | A | 14 September 1999 | (Family: none) | | | |
| US | 2020/0181351 | A1 | 11 June 2020 | EP whole document | 3758535 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003039565 A
- JP 2000129028 A